(19) Europäisches Patentamt
European Patent Office
Office européen des brevets

(11) EP 4 410 852 A1

(12) EUROPEAN PATENT APPLICATION
published in accordance with Art. 153(4) EPC

(43) Date of publication:
07.08.2024 Bulletin 2024/32

(21) Application number: 22875472.7

(22) Date of filing: 16.06.2022

(51) International Patent Classification (IPC):
*C08F 290/06* (2006.01) *B41J 2/01* (2006.01)
*B41M 5/00* (2006.01) *C08F 265/02* (2006.01)
*C09D 11/30* (2014.01)

(52) Cooperative Patent Classification (CPC):
B41J 2/01; B41M 5/00; C08F 265/02; C08F 290/06;
C09D 11/30

(86) International application number:
PCT/JP2022/024151

(87) International publication number:
WO 2023/053593 (06.04.2023 Gazette 2023/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.09.2021 JP 2021161314

(71) Applicant: FUJIFILM Corporation
Tokyo 106-8620 (JP)

(72) Inventors:
- SEKINE, Shinichiro
  Ashigarakami-gun, Kanagawa 258-8577 (JP)
- SUZUKI, Shota
  Ashigarakami-gun, Kanagawa 258-8577 (JP)
- HAMADA, Naoka
  Ashigarakami-gun, Kanagawa 258-8577 (JP)

(74) Representative: Klunker IP
Patentanwälte PartG mbB
Destouchesstraße 68
80796 München (DE)

# (54) AQUEOUS DISPERSION AND FILM FORMATION METHOD

(57) An aqueous dispersion and a film forming method are provided. The aqueous dispersion contains water and particles including a resin and a photoradical generator and having a polymerizable group. The polymerizable group includes an ethylenic double bond. The proportion of the number of moles of the photoradical generator relative to the number of moles of the ethylenic double bonds in the particles is 4 mol% or more, and the proportion of the number of moles of the photoradical generator present as a solid relative to the total number of moles of the photoradical generator is 5 mol% or less.

EP 4 410 852 A1

## Description

BACKGROUND OF THE INVENTION

1. Field of the Invention

The present disclosure relates to an aqueous dispersion and a film forming method.

2. Description of the Related Art

Conventionally, aqueous dispersions of microcapsules in which microcapsules including a core and a shell are dispersed in an aqueous medium (a medium including water) are known.

For example, JP6584677B describes an aqueous dispersion containing water and particles that include a chain polymer including a structural unit (1), a structural unit (2), and a hydrophilic group and that include a polymerizable group.

JP2013-202928A discloses an emulsion of a medium-philic linear urethane (meth)acrylate in which a photopolymerization initiator and a polymerizable compound are encapsulated.

WO2021/059933A describes an aqueous dispersion containing water and particles that contain a polymerizable monomer and a polymer P including a hydrophilic group and a bond U that is at least one selected from the group consisting of a urethane bond and a urea bond, and that include a structure A that is at least one selected from the group consisting of a polysiloxane bond and a fluorohydrocarbon group.

SUMMARY OF THE INVENTION

There are cases where it is required to reduce elution (i.e., migration) of components included in an aqueous dispersion from a film formed by applying the aqueous dispersion onto a substrate and curing the aqueous dispersion.

According to an aspect of the present disclosure, an aqueous dispersion and a film forming method that allow for reduced migration are provided.

The present disclosure includes the following aspects.

<1> An aqueous dispersion containing water and particles including a resin and a photoradical generator and having a polymerizable group, wherein the polymerizable group includes an ethylenic double bond, the proportion of the number of moles of the photoradical generator relative to the number of moles of the ethylenic double bonds in the particles is 4 mol% or more, and the proportion of the number of moles of the photoradical generator present as a solid relative to the total number of moles of the photoradical generator is 5 mol% or less.

<2> The aqueous dispersion according to <1>, wherein the proportion of the number of moles of the photoradical generator relative to the number of moles of the ethylenic double bonds is 5 mol% to 40 mol%.

<3> The aqueous dispersion according to <1> or <2>, wherein the HSP distance between the resin and the photoradical generator is 5.5 $MPa^{1/2}$ or less.

<4> The aqueous dispersion according to any one of <1> to <3>, wherein the particles further have an amino group A having a hydrogen atom on a carbon atom at an $\alpha$-position.

<5> The aqueous dispersion according to <4>, wherein the proportion of the number of moles of the amino group A having a hydrogen atom on the carbon atom at the $\alpha$-position relative to the total number of moles of the photoradical generator is 5 mol% to 100 mol%.

<6> The aqueous dispersion according to <4> or <5>, wherein the particles further include a compound having the amino group A having a hydrogen atom on the carbon atom at the $\alpha$-position.

<7> The aqueous dispersion according to <6>, wherein the proportion of the number of moles of the compound, having the amino group A, that is present as a solid relative to the total number of moles of the compound having the amino group A in the particles is 5 mol% or less.

<8> The aqueous dispersion according to <6> or <7>, wherein the HSP distance between the photoradical generator and the compound having the amino group A having a hydrogen atom on the carbon atom at the $\alpha$-position is 6 $MPa^{1/2}$ or less.

<9> The aqueous dispersion according to any one of <1> to <8>, wherein the resin has a glass transition temperature of 90°C or lower.

<10> The aqueous dispersion according to any one of <1> to <9>, wherein the photoradical generator includes a hydrogen abstraction type initiator having a number average molecular weight of 1,000 or more.

<11> The aqueous dispersion according to any one of <1> to <10>, wherein the particles include a polymerizable monomer, and the polymerizable group includes a polymerizable group of the polymerizable monomer.

<12> The aqueous dispersion according to <11>, wherein the aqueous dispersion is an inkjet ink.

<13> A film forming method including applying the aqueous dispersion according to any one of <1> to <12> onto a substrate and curing the aqueous dispersion applied onto the substrate.

According to an aspect of the present disclosure, an aqueous dispersion and a film forming method that allow for reduced migration are provided.

DESCRIPTION OF THE PREFERRED EMBODIMENTS

In the present disclosure, a numerical range indicated using "to" means a range including the numerical values recited before and after "to" as the minimum value and the maximum value, respectively.

In the present disclosure, when a plurality of substances corresponding to one component are present in a composition, the amount of that component in the composition means the total amount of the plurality of substances present in the composition unless otherwise specified.

For numerical ranges recited in a stepwise manner in the present disclosure, the upper limit or lower limit of a certain numerical range may be replaced with the upper limit or lower limit of another numerical range recited in a stepwise manner, or may be replaced with a value shown in the Examples.

In the present disclosure, the term "step" includes not only an independent step, but also a step that cannot be clearly distinguished from other steps as long as the intended purpose of that step is achieved.

In the present disclosure, "*" in a chemical formula represents a point of attachment.

In the present disclosure, the concept of "image" includes not only a pattern image (e.g., a character, a symbol, or a figure), but also a solid image.

In the present disclosure, "light" is a concept including active energy radiation such as $\gamma$-rays, $\beta$-rays, electron beams, ultraviolet radiation, and visible light.

In the present disclosure, ultraviolet radiation may be referred to as "ultraviolet (UV) light".

In the present disclosure, light emitted from a light-emitting diode (LED) light source may be referred to as "LED light".

In the present disclosure, "(meth)acrylic acid" is a concept that encompasses both acrylic acid and methacrylic acid, "(meth)acrylate" is a concept that encompasses both acrylate and methacrylate, and "(meth)acryloyl group" is a concept that encompasses both an acryloyl group and a methacryloyl group.

Aqueous Dispersion

An aqueous dispersion of the present disclosure contains water and particles (hereinafter also referred to as "specific particles") including a resin and a photoradical generator and having a polymerizable group. The polymerizable group includes an ethylenic double bond. The proportion of the number of moles of the photoradical generator relative to the number of moles of the ethylenic double bonds in the particles is 4 mol% or more, and the proportion of the number of moles of the photoradical generator present as a solid relative to the total number of moles of the photoradical generator is 5 mol% or less.

The aqueous dispersion of the present disclosure allows for reduced migration.

The reason why the above advantageous effect is exhibited is presumed as follows.

The formation of a film using the aqueous dispersion can be performed, for example, by applying the aqueous dispersion including the specific particles onto a substrate and irradiating the specific particles applied onto the substrate with light. This procedure causes the polymerizable group of the specific particles applied onto the substrate to undergo a polymerization reaction, thereby forming a film (i.e., a cured film).

In the aqueous dispersion of the present disclosure, the proportion of the number of moles of the photoradical generator relative to the number of moles of the ethylenic double bonds is 4 mol% or more, which promotes the polymerization reaction and thus improves the crosslink density. This will result in reduced migration. In addition, in the aqueous dispersion of the present disclosure, the proportion of the number of moles of the photoradical generator present as a solid relative to the total number of moles of the photoradical generator is 5 mol% or less, which improves the mobility of radicals produced from the photoradical generator and of the polymerizable group and thus improves the crosslink density. This will result in reduced migration.

On the other hand, JP6584677B and WO2021/059933A disclose embodiments in which the proportion of the number of moles of a photoradical generator relative to the number of moles of ethylenic double bonds is less than 4 mol%. Further, JP2013-202928A discloses an embodiment in which the proportion of the number of moles of a photoradical generator present as a solid relative to the total number of moles of the photoradical generator is more than 5 mol%. JP6584677B, JP2013-202928A, and WO2021/059933A do not focus on the content of the photoradical generator relative to the C=C value of the particles or the proportion of the photoradical generator present as a solid in the particles.

Hereinafter, each component that can be contained in the aqueous dispersion will be described.

Specific Particles

The aqueous dispersion of the present disclosure contains specific particles. As described above, the specific particles include a resin and a photoradical generator and have a polymerizable group.

Polymerizable Group

Examples of forms in which the specific particles have a polymerizable group include the following forms:

Form 1: a form in which the resin included in the specific particles has a polymerizable group
Form 2: a form in which the specific particles further include a polymerizable monomer in addition to the resin and the photoradical generator
Form 3: a form in which the resin included in the specific particles has a polymerizable group, and the specific particles further include a polymerizable monomer

Among these, from the viewpoint of further improving the rubfastness of the film to be formed, it is preferred that the specific particles include a polymerizable monomer, and the polymerizable group of the specific particles include a polymerizable group of the polymerizable monomer. That is, the form in which the specific particles have a polymerizable group is preferably form 2 or 3 above.
Since the polymerizable monomer exhibits high mobility during polymerization, the inclusion of the polymerizable monomer in the specific particles will improve the crosslink density and thus improve the rubfastness of the film to be formed.
Details of the resin having a polymerizable group and the polymerizable monomer will be described later.

Amino Group A

The specific particles preferably further have an amino group A having a hydrogen atom on the carbon atom at the $\alpha$-position (hereinafter also simply referred to as "amino group A").
Examples of forms in which the specific particles have the amino group A include the following forms:

Form 1: a form in which the resin included in the specific particles has the amino group A
Form 2: a form in which the specific particles further include a compound having the amino group A in addition to the resin and the photoradical generator
Form 3: a form in which the resin included in the specific particles has the amino group A, and the specific particles further include a compound having the amino group A

Among these, from the viewpoint of further reducing migration and further improving the rubfastness of the film to be formed, it is preferred that the specific particles further include a compound having the amino group A. That is, the form in which the specific particles have the amino group A is preferably form 2 or 3 above.
When the specific particles have the amino group A, inhibition of polymerization due to oxygen is reduced, and the polymerization of the particles having a polymerizable group proceeds efficiently. Therefore, migration is reduced, and the film to be formed has excellent rubfastness.
Details of the resin having the amino group A and the compound having the amino group A will be described later.

Number of Moles of Amino Group A Relative to Total Number of Moles of Photoradical Generator

When the specific particles in the aqueous dispersion of the present disclosure have the amino group A, the proportion of the number of moles of the amino group A relative to the total number of moles of the photoradical generator is preferably 5 mol% to 100 mol%, more preferably 10 mol% to 80 mol%. When the above proportion is 5 mol% or more, inhibition of polymerization due to oxygen is reduced, and the polymerization of the particles having a polymerizable group proceeds efficiently. Therefore, migration is reduced, and the film to be formed has excellent rubfastness. On the other hand, when the above proportion is 100 mol% or less, there is little unreacted amino group after the reaction between the photoradical generator and the amino group, and migration can be reduced. In addition, hydrolysis of other components due to amines in an ink is reduced. Therefore, the ink has excellent preservation stability.
The number of moles of amino groups is measured by the following method.
An aqueous dispersion including the specific particles is prepared by removing components other than the specific particles and water from the aqueous dispersion under measurement.
Centrifugal separation is performed on 50 g of the prepared aqueous dispersion at a rotational speed of 80,000

rpm (abbreviation for revolutions per minute) for 40 minutes.

A supernatant formed by centrifugal separation is removed to collect a sediment (specific particles).

About 0.5 g of the collected specific particles are weighed into a container 1, and the weighed value W1 (g) is recorded. Next, the weighed specific particles are diluted by adding 60 mL of acetic acid to obtain a sample 1 for measurement of degree of neutralization.

The resulting sample 1 for measurement of degree of neutralization is titrated with a 0.1 N (= 0.1 mol/L) perchloric acid-acetic acid solution as a titrant, and the amount of titrant required to reach an equivalence point is recorded as F1 (mL). Titration is further continued, and the amount of titrant required to reach a second equivalence point is recorded as F2 (mL).

Here, "F1 (mL)" corresponds to the number of moles of acid groups neutralized with a strong base, and "(F2 - F1) (mL)" corresponds to the number of moles of amino groups, which are a weak base.

C=C Value

The polymerizable group of the specific particles preferably includes an ethylenic double bond from the viewpoint of further improving the rubfastness of the film to be formed.

When the C=C value of the specific particles is defined as the number of millimoles of ethylenic double bonds in 1 g of the specific particles, the C=C value of the specific particles is preferably 0.30 mmol/g or more, more preferably 1.0 mmol/g or more, and even more preferably 2.0 mmol/g or more, from the viewpoint of further improving the rubfastness of the film to be formed.

On the other hand, the C=C value of the specific particles is preferably 6.0 mmol/g or less, more preferably 5.0 mmol/g or less, and even more preferably 4.0 mmol/g or less, from the viewpoint of dispersion stability.

The total solid content of the specific particles in the aqueous dispersion of the present disclosure is preferably 50% by mass or more, more preferably 60% by mass or more, even more preferably 70% by mass or more, particularly preferably 80% by mass or more, and most preferably 85% by mass or more, relative to the total solid content of the aqueous dispersion.

This further improves the rubfastness of the film to be formed.

The total solid content of the specific particles in the aqueous dispersion of the present disclosure is preferably 1% by mass to 50% by mass, more preferably 3% by mass to 40% by mass, and even more preferably 5% by mass to 30% by mass, relative to the total amount of the aqueous dispersion.

When the total solid content of the specific particles is 1% by mass or more relative to the total amount of the aqueous dispersion, the rubfastness of the film to be formed is further improved.

On the other hand, when the total solid content of the specific particles is 50% by mass or less relative to the total amount of the aqueous dispersion, the dispersion stability of the specific particles is further improved.

In the present disclosure, the total solid content of the specific particles means the total amount of the specific particles excluding the solvent (i.e., water and organic solvents). When the specific particles include no solvent, the total solid content of the specific particles is equal to the total amount of the specific particles.

The volume average dispersed particle size of the specific particles in the aqueous dispersion is preferably, but not particularly limited to, 0.01 μm to 10 μm, more preferably 0.01 μm to 5 μm, even more preferably 0.05 μm to 1 μm, particularly preferably 0.05 μm to 0.5 μm, and most preferably 0.05 μm to 0.3 μm, from the viewpoint of dispersion stability.

In the present disclosure, "volume average dispersed particle size" refers to a value measured by a light scattering method. The measurement of the volume average dispersed particle size of the specific particles by the light scattering method is performed using, for example, LA-960 (Horiba, Ltd.).

Resin

The specific particles included in the aqueous dispersion include at least one resin.

Examples of resins include urethane polymers, urethane-urea polymers, urea polymers, acrylic polymers, polyesters, polyolefins, polystyrenes, polycarbonates, and polyamides.

Here, "urethane polymer" means a polymer including a urethane bond and not including a urea bond, "urea polymer" means a polymer including a urea bond and not including a urethane bond, and "urethane-urea polymer" means a polymer including a urethane bond and a urea bond.

In addition, "acrylic polymer" means a polymer (homopolymer or copolymer) of a starting monomer including at least one selected from the group consisting of acrylic acid, acrylic acid derivatives (e.g., acrylic acid esters), methacrylic acid, and methacrylic acid derivatives (e.g., methacrylic acid esters).

The resin preferably includes a bond U that is at least one of a urethane bond or a urea bond. In other words, the resin is preferably a urethane polymer, a urethane-urea polymer, or a urea polymer.

When the resin includes the bond U, interaction between the specific particles in the aqueous dispersion upon landing on the substrate is facilitated by interaction (e.g., hydrogen bonding) between the bonds U. This allows curing between the specific particles to proceed more smoothly, thus further improving the rubfastness of the film to be formed.
The bond U preferably includes a urethane bond.
In other words, the resin preferably includes a urethane bond and does not include a urea bond, or includes a urethane bond and a urea bond.

Polymerizable Group

The specific particles included in the aqueous dispersion of the present disclosure have a polymerizable group. The polymerizable group of the specific particles may be a polymerizable group of a resin having a polymerizable group. That is, the resin included in the specific particles may have a polymerizable group. As described later, when the specific particles include a polymerizable monomer, the resin need not have a polymerizable group. Thus, the resin need not necessarily have a polymerizable group.
However, the resin preferably has a polymerizable group from the viewpoint of improving the rubfastness of the film to be formed.
The resin may contain only one type of polymerizable group or may contain two or more types of polymerizable group.
The presence of a polymerizable group in the resin can be confirmed by, for example, Fourier transform infrared spectrometry (FT-IR) analysis.
The polymerizable group that can be included in the resin is preferably a photopolymerizable group, more preferably a photoradical polymerizable group.
The photoradical polymerizable group is preferably a (meth)acryloyl group, an allyl group, a styryl group, or a vinyl group, and is more preferably a (meth)acryloyl group from the viewpoint of radical polymerization reactivity and the hardness of the film to be formed.
Among these, the polymerizable group that can be included in the resin preferably includes an ethylenic double bond.
When the C=C value of the resin is defined as the number of millimoles of ethylenic double bonds in 1 g of the resin, the C=C value of the resin is preferably 0.05 mmol or more, more preferably 0.10 mmol/g or more, even more preferably 0.30 mmol/g or more, and particularly preferably 0.50 mmol/g or more, from the viewpoint of further improving the hardness of the film to be formed.
On the other hand, the C=C value of the resin is preferably 3.00 mmol/g or less, more preferably 2.50 mmol/g or less, even more preferably 2.00 mmol/g or less, and particularly preferably 1.50 mmol/g or less, from the viewpoint of dispersion stability.
The resin may be a chain polymer or a crosslinked polymer.
In the present disclosure, "chain polymer" means a polymer having no crosslinked structure, and "crosslinked polymer" means a polymer having a crosslinked structure.
The chain polymer may have a ring structure or a branched structure.
For specific particles including a chain polymer, reference can be made to, for example, JP6584677B.
A preferred form of the specific particles in which the resin is a crosslinked polymer is a microcapsule including a shell formed of a polymer P that is a crosslinked polymer and a core including a polymerizable monomer.
For specific particles including a crosslinked polymer, reference can be made to, for example, JP6510681B.
The resin is preferably a chain polymer having no crosslinked structure from the viewpoint of ejectability.
Among these, the resin preferably includes a structural unit derived from an isocyanate compound and a structural unit derived from a compound including an active hydrogen group.
The above preferred form of the resin includes a bond U formed by the reaction of an isocyanate group of an isocyanate compound with an active hydrogen group of a compound including an active hydrogen group.
The active hydrogen group is preferably a hydroxy group, a primary amino group, or a secondary amino group.
For example, the reaction of an isocyanate group with a hydroxy group forms a urethane group.
On the other hand, the reaction of an isocyanate group with a primary amino group or a secondary amino group forms a urea group.
The isocyanate compound and the compound including an active hydrogen group that are used as starting materials for the resin having the above preferred structure may hereinafter be referred to as "starting compound".
One isocyanate compound may be used alone as a starting compound, or two or more isocyanate compounds may be used.
One compound including an active hydrogen group may be used alone as a starting compound, or two or more compounds including an active hydrogen group may be used.
It is preferred that at least one isocyanate compound used as a starting compound be a di- or higher-functional

isocyanate compound.

It is preferred that at least one compound, including an active hydrogen group, that is used as a starting compound be a compound including two or more active hydrogen groups.

Of the starting compounds, at least one of the isocyanate compound or the compound including an active hydrogen group preferably includes an anionic group. This allows a resin including an anionic group to be easily produced. In this case, at least some of the anionic groups in the resin finally obtained may be groups obtained by neutralizing the anionic group in the starting compound.

A more preferred form is a form in which, of the starting compounds, at least one compound including an active hydrogen group is a compound including an active hydrogen group and an anionic group.

When the resin includes a polymerizable group, it is preferred that, of the starting compounds, at least one of the isocyanate compound or the compound including an active hydrogen group include a polymerizable group. This allows a resin including a polymerizable group to be easily produced.

A more preferred form is a form in which, of the starting compounds, at least one compound including an active hydrogen group is a compound including an active hydrogen group and a polymerizable group.

When the resin is a chain polymer, the resin can be produced, for example, by reacting a difunctional isocyanate compound with a compound including two active hydrogen groups.

When the resin is a crosslinked polymer, the resin can be produced, for example, by reacting a tri- or higher-functional isocyanate compound with a compound including two or more active hydrogen groups.

When the resin is a crosslinked polymer, the resin can also be produced, for example, by reacting a difunctional isocyanate compound with a compound including three or more active hydrogen groups.

Hereinafter, preferred starting compounds will be described.

The isocyanate compound is preferably a di- or higher-functional isocyanate compound, and more preferably a difunctional to hexafunctional isocyanate compound.

When a difunctional isocyanate compound is used as a starting compound, the resin preferably includes a structural unit (P1) shown below, which is a structural unit derived from the difunctional isocyanate compound.

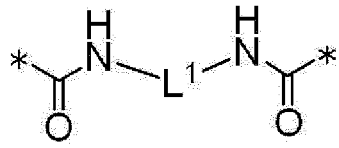

(P1)

In the structural unit (P1), $L^1$ represents a divalent organic group having 1 to 20 carbon atoms, and * represents a point of attachment.

Specific examples of $L^1$ include residues obtained by removing two isocyanate groups (NCO groups) from difunctional isocyanate compounds shown as specific examples below.

Specific examples of difunctional isocyanate compounds are as follows. However, the difunctional isocyanate compound is not limited to the following specific examples.

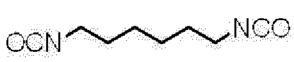

HDI

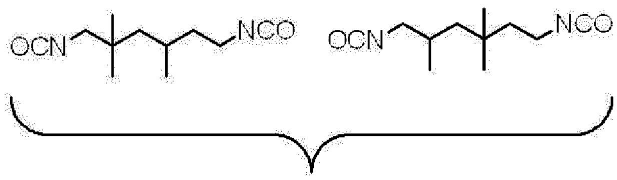

TMHDI

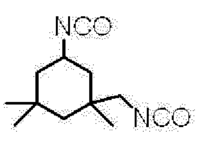

IPDI

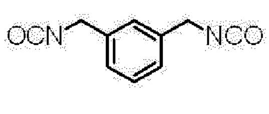

XDI

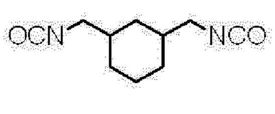

HXDI

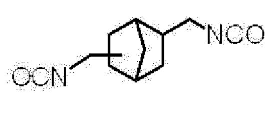

NBDI

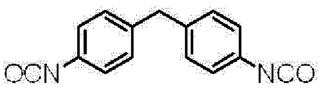

MDI

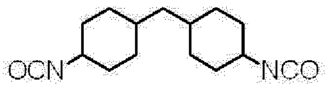

HMDI

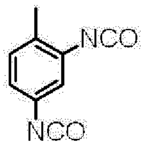

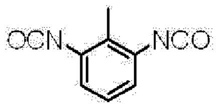

TDI

In addition, difunctional isocyanate compounds derived from the specific examples shown above can also be used as the difunctional isocyanate compound. Examples thereof include Duranate (registered trademark) D101, D201, and A101 (manufactured by Asahi Kasei Corporation).

In addition, the tri- or higher-functional isocyanate compound is preferably a reaction product of at least one selected from the group consisting of difunctional isocyanate compounds with at least one selected from the group consisting of compounds including three or more active hydrogen groups (e.g., tri- or higher-functional polyol compounds, tri- or higher-functional polyamine compounds, and tri- or higher-functional polythiol compounds).

The number of moles (number of molecules) of the difunctional isocyanate compound to be reacted with the compound including three or more active hydrogen groups is preferably 0.6 times or more, more preferably 0.6 to 5 times, even more preferably 0.6 to 3 times, and still more preferably 0.8 to 2 times the number of moles of active hydrogen groups (number of equivalents of active hydrogen groups) in the compound including three or more active hydrogen groups.

Examples of difunctional isocyanate compounds for forming tri- or higher-functional isocyanate compounds include the difunctional isocyanate compounds shown as specific examples above.

Examples of compounds including three or more active hydrogen groups for forming tri- or higher-functional isocyanate compounds include compounds described in paragraphs 0057 and 0058 of WO2016/052053A.

Examples of tri- or higher-functional isocyanate compounds include adduct type tri- or higher-functional isocyanate compounds, isocyanurate type tri- or higher-functional isocyanate compounds, and biuret type tri- or higher-functional isocyanate compounds.

Examples of commercially available products of adduct type tri- or higher-functional isocyanate compounds include Takenate (registered trademark) D-102, D-103, D-103H, D-103M2, P49-75S, D-110N, D-120N, D-140N, and D-160N (Mitsui Chemicals, Inc.), Desmodur (registered trademark) L75 and UL57SP (Sumika Bayer Urethane Co., Ltd.), Coronate (registered trademark) HL, HX, and L (Nippon Urethane Polymer Co., Ltd.), and P301-75E (Asahi Kasei Corporation).

Examples of commercially available products of isocyanurate type tri- or higher-functional isocyanate compounds include Takenate (registered trademark) D-127N, D-170N, D-170HN, D-172N, and D-177N (Mitsui Chemicals, Inc.), Sumidur N3300 and Desmodur (registered trademark) N3600, N3900, and Z4470BA (Sumika Bayer Urethane Co., Ltd.), Coronate (registered trademark) HX and HK (Nippon Urethane Polymer Co., Ltd.), and Duranate (registered trademark) TPA-100, TKA-100, TSA-100, TSS-100, TLA-100, and TSE-100 (Asahi Kasei Corporation).

Examples of commercially available products of biuret type tri- or higher-functional isocyanate compounds include Takenate (registered trademark) D-165N and NP1100 (Mitsui Chemicals, Inc.), Desmodur (registered trademark) N3200 (Sumika Bayer Urethane Co., Ltd.), and Duranate (registered trademark) 24A-100 (Asahi Kasei Corporation).

At least one isocyanate compound used as a starting compound may be an isocyanate compound including an anionic group. For isocyanate compounds including an anionic group, reference can be made to paragraphs 0112 to 0118 and paragraphs 0252 to 0254 of WO2016/052053A.

At least one isocyanate compound used as a starting compound may be an isocyanate compound including a polymerizable group. For isocyanate compounds including a polymerizable group, reference can be made to paragraphs 0084 to 0089, 0203, and 0205 of WO2016/052053A.

The compound including an active hydrogen group is preferably a compound including two or more active hydrogen groups.

More preferably, the compound including two or more active hydrogen groups is a polyol compound (i.e., a compound having two or more hydroxy groups) or a polyamine compound (i.e., a compound having two or more amino groups).

When a compound including an active hydrogen group and an anionic group is used as a starting compound, the polymer P preferably includes at least one structural unit (P0) shown below.

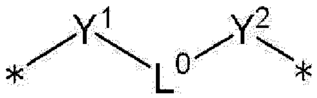

(P0)

In the structural unit (P0),

$L^0$ represents a divalent organic group,
* represents a point of attachment,
$Y^1$ and $Y^2$ each independently represent an oxygen atom, a sulfur atom, or a $-NR^1-$ group,
$R^1$ represents a hydrogen atom or a hydrocarbon group having 1 to 10 carbon atoms, and
* represents a point of attachment.

In the structural unit (P0), the divalent organic group represented by $L^0$ may be a group composed of carbon and hydrogen atoms or may be a group including carbon and hydrogen atoms and further including a heteroatom (e.g., an oxygen atom, a nitrogen atom, or a sulfur atom).

Specific examples of $L^0$ include residues obtained by removing two active hydrogen groups from specific examples, described below, of compounds including two or more active hydrogen groups.

$R^1$ is preferably a hydrogen atom or a hydrocarbon group having 1 to 6 carbon atoms, and more preferably a hydrogen atom or a hydrocarbon group having 1 to 3 carbon atoms.

$Y^1$ and $Y^2$ are preferably each independently an oxygen atom or a $-NR^1-$ group, and more preferably an oxygen atom.

Specific examples of diol compounds for use as the compound including an active hydrogen group are shown below, although the compound including an active hydrogen group is not limited to the following specific examples.

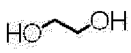
(1)

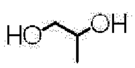
(2)

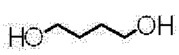
(3)

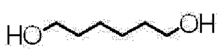
(4)

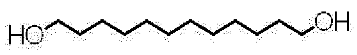
(5)

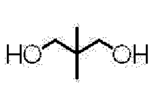
(6)

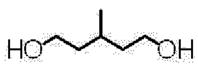
(7)

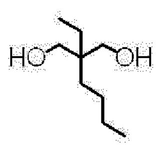
(8)

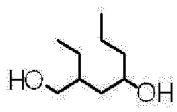
(9)

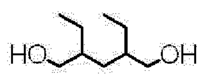
(10)

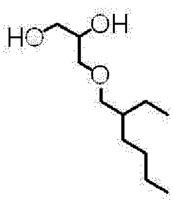
(11)

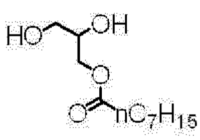
(12)

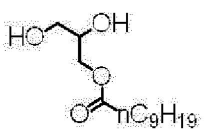
(13)

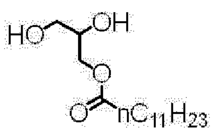
(14)

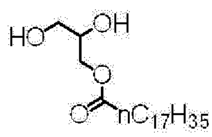
(15)

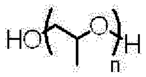
(16)
PPG

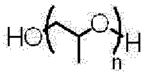
(16-2)
PEG

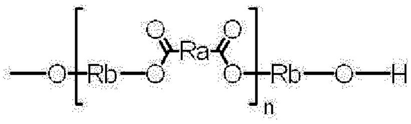
(17)
PEs

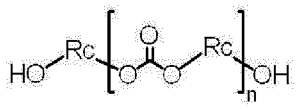
(18)
PCD

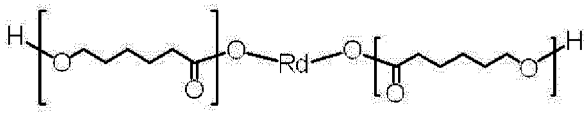

(19)
PCL

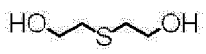

(20)

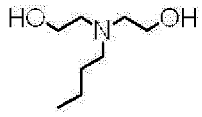

(21)

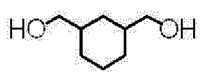

(22)

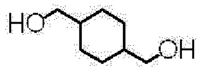

(23)

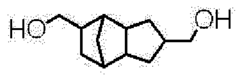

(24)

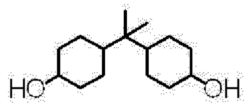

(25)

In compounds (12) to (15), $nC_7H_{15}$, $nC_9H_{19}$, $nC_{11}H_{23}$, and $nC_{17}H_{35}$ represent a normalheptyl group, a normal-nonyl group, a normal-undecyl group, and a normal-heptadecyl group, respectively.

Compound (16) PPG is polypropylene glycol, where n is the number of repeating units. Compound (16-2) PEG is polyethylene glycol, where n is the number of repeating units. Compound (17) PEs is a polyester diol, where n is the number of repeating units, and Ra and two occurrences of Rb are each independently a divalent hydrocarbon group having 2 to 25 carbon atoms. In compound (17) PEs, n occurrences of Ra may be the same or different. In compound (17) PEs, (n + 1) occurrences of Rb may be the same or different.

Compound (18) PCD is a polycarbonate diol, where n is the number of repeating units, and (n + 1) occurrences of Rc are each independently an alkylene group having 2 to 12 (preferably 3 to 8, more preferably 3 to 6) carbon atoms. In compound (18) PC, (n + 1) occurrences of Rc may be the same or different.

Compound (19) PCL is polycaprolactone diol, where n and m are each the number of repeating units, and Rd is an alkylene group having 2 to 25 carbon atoms.

Among these, compounds (11) to (19) are preferred as the compound including an active hydrogen group from the viewpoint of lowering the glass transition temperature of the resin.

When the resin has a polymerizable group, the compound including an active hydrogen group may be a compound including an active hydrogen group and a polymerizable group.

The compound including an active hydrogen group and a polymerizable group is suitable as a compound for introducing a polymerizable group into the resin.

Specific examples of diol compounds for use as the compound including an active hydrogen group and a polymerizable group are shown below, although the compound including an active hydrogen group and a polymerizable group is not limited to the following specific examples.

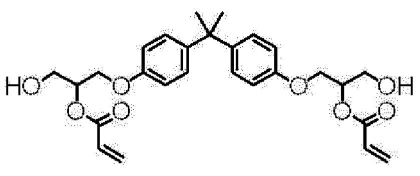

(26)

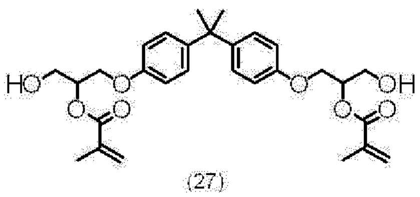

(27)

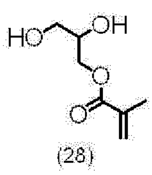

(28)

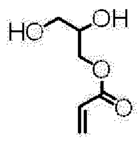

(29)

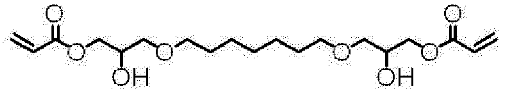

(30)

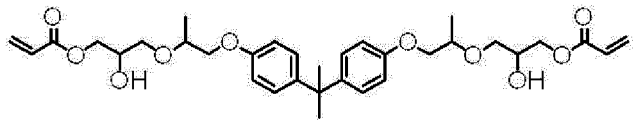

(31)
DA-250

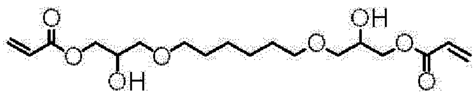

(32)

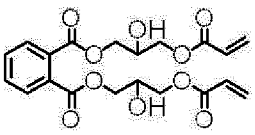

(33)

DA-721

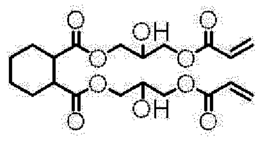

(34)

DA-722

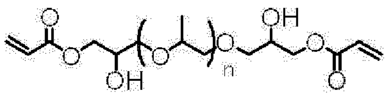

n=1

(35)

DA-911M

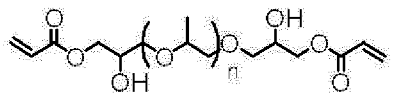

(36) n=3

DA-920

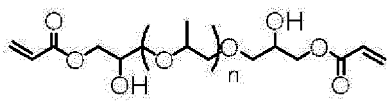

n=11

(37)

DA-931

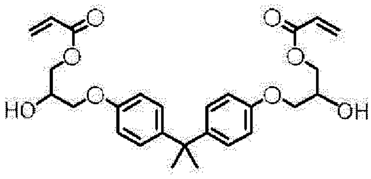

(38)

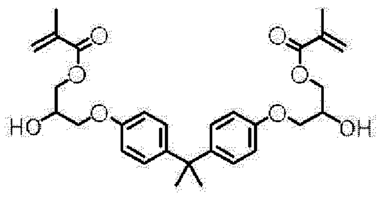

(39)

For compounds including an active hydrogen group and a polymerizable group, reference may be made to the description in paragraphs 0075 to 0089 of WO2016/052053A where appropriate.

The compound including an active hydrogen group may also be a compound including an active hydrogen group and an anionic group.

The compound including an active hydrogen group and an anionic group is suitable as a compound for introducing an anionic group into the resin.

When the compound including an active hydrogen group and an anionic group is used as a starting compound, the resin preferably includes a structural unit (P2) shown below.

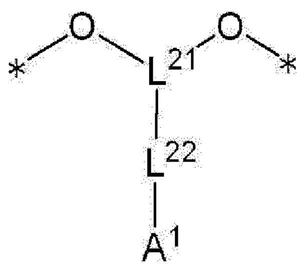

(P2)

In the structural unit (P2),

$L^{21}$ represents a trivalent organic group having 1 to 20 carbon atoms,
$L^{22}$ represents a single bond or a divalent organic group having 1 to 20 carbon atoms,
$A^1$ represents a carboxy group, a salt of a carboxy group, a sulfo group, or a salt of a sulfo group, and
* represents a point of attachment.

The trivalent organic group having 1 to 20 carbon atoms that is represented by $L^{21}$ preferably has 2 to 20 carbon atoms, more preferably 3 to 20 carbon atoms, and even more preferably 4 to 20 carbon atoms.

The trivalent organic group represented by $L^{21}$ is preferably a trivalent hydrocarbon group or a group obtained by replacing at least one carbon atom in a trivalent hydrocarbon group with a heteroatom (preferably an oxygen atom,

a sulfur atom, or a nitrogen atom).

The divalent organic group having 1 to 20 carbon atoms that is represented by $L^{22}$ preferably has 1 to 10 carbon atoms, and more preferably 1 to 6 carbon atoms.

The divalent organic group represented by $L^{22}$ is preferably a divalent hydrocarbon group (preferably an alkylene group) or a group obtained by replacing at least one carbon atom in a divalent hydrocarbon group (preferably an alkylene group) with an oxygen atom or a sulfur atom (preferably an oxygen atom).

$L^{22}$ may be a single bond.

Specific examples of compounds including an active hydrogen group and an anionic group are shown below, although the compound including an active hydrogen group and an anionic group is not limited to the following specific examples. The carboxy and sulfo groups in the following specific examples may each be neutralized (i.e., may be salts of carboxy and sulfo groups).

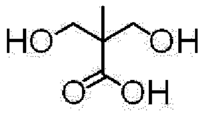

DMPA

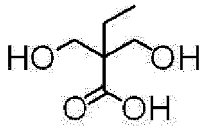

DMBA

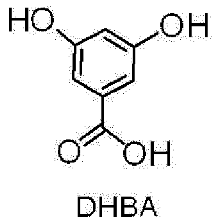

DHBA

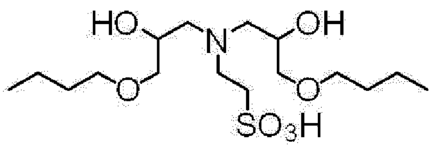

DSO

For compounds including an active hydrogen group and an anionic group, reference can be made to the description in paragraphs 0112 to 0118 and paragraphs 0252 to 0254 of WO2016/052053A where appropriate.

Amino Group A

The resin included in the specific particles may have an amino group A having a hydrogen atom on the carbon atom at the $\alpha$-position. When the resin has the amino group A, inhibition of polymerization due to oxygen is reduced, and the polymerization of the particles having a polymerizable group proceeds efficiently. Therefore, migration will be reduced, and the film to be formed will have excellent rubfastness.

The resin preferably has a weight average molecular weight (Mw) of 5,000 or more, more preferably 7,000 or more, and even more preferably 8,000 or more, from the viewpoint of the dispersion stability of the aqueous dispersion (i.e., the dispersion stability of the specific particles).

The upper limit of Mw may be, for example, but not particularly limited to, 150,000, 100,000, 70,000, or 50,000.

In the present disclosure, the number average molecular weight and the weight average molecular weight are measured using gel permeation chromatography (GPC). For example, HLC-8220GPC (manufactured by Tosoh Corporation) is used as GPC, three TSKgel Super Multipore HZ-H columns (manufactured by Tosoh Corporation, 4.6 mm ID $\times$ 15 cm) are used as columns, and tetrahydrofuran (THF) is used as an eluant. The conditions are as follows: the sample concentration is 0.45% by mass, the flow rate is 0.35 mL/min, the sample injection volume is 10 $\mu$L, the measurement temperature is 40°C, and detection is performed using a differential refractive index (RI) detector. A calibration curve is prepared using, as standard samples, the following eight samples of the product name "TSK standard polystyrene" manufactured by Tosoh Corporation: "F-40", "F-20", "F-4", "F-1", "A-5000", "A-2500", "A-1000", and "n-propylbenzene".

The resin preferably has a glass transition temperature of 90°C or lower, and more preferably 70°C or lower. The lower limit of the glass transition temperature is, for example, but not particularly limited to, -50°C.

When the resin has a glass transition temperature of 90°C or lower, the mobility of the resin is improved, and thus the reaction rate of the polymerization reaction is improved. In addition, when the resin has a glass transition temperature of 90°C or lower in a case where the specific particles include a polymerizable monomer, the mobility of the polymerizable monomer is improved, and the reaction rate of the polymerization reaction is improved. This results in reduced migration.

The glass transition temperature (Tg) of the resin means a value measured using differential scanning calorimetry (DSC).

Specific measurement of the glass transition temperature is performed in accordance with a method described in JIS K 7121 (1987) or JIS K 6240 (2011).

The glass transition temperature in the present disclosure is an extrapolated glass transition onset temperature (Tig).

The glass transition temperature is measured by the following method.

When the glass transition temperature is determined, the apparatus is held at a temperature about 50°C lower than the expected glass transition temperature of the resin until the apparatus becomes stable at that temperature. The

resin is then heated at a heating rate of 20°C/min to a temperature about 30°C higher than the temperature at which glass transition completes, and a differential thermal analysis (DTA) curve or a DSC curve is prepared.

The extrapolated glass transition onset temperature (Tig) is determined as a temperature at an intersection between a straight line extended from the baseline of the DTA curve or DSC curve on the low-temperature side to the high-temperature side and a tangent line drawn at a point where the gradient of the curve in the stepwise-changing portion of glass transition is maximized.

When the aqueous dispersion includes two or more resins, the glass transition temperature (Tg) of the resin means a weighted average of the glass transition temperatures of the individual resins.

The content of the resin is preferably 20% by mass to 95% by mass, more preferably 30% by mass to 90% by mass, and even more preferably 40% by mass to 85% by mass, relative to the total solid content of the specific particles from the viewpoint of dispersion stability. Photoradical Generator

The specific particles included in the aqueous dispersion include at least one photoradical generator.

The photoradical generator is a compound that generates radicals when irradiated with light.

The photoradical generator may be, for example, an intramolecular cleavage type photopolymerization initiator (also simply referred to as "cleavage type photopolymerization initiator"), which undergoes intramolecular cleavage, or an intramolecular hydrogen abstraction type photopolymerization initiator (also simply referred to as "hydrogen abstraction type photopolymerization initiator"), which undergoes abstraction of hydrogen from the molecule.

The intramolecular cleavage type photopolymerization initiator may be, for example, an alkylphenone-based photopolymerization initiator, an acylphosphine oxide-based photopolymerization initiator, or an oxime ester-based photopolymerization initiator. Among these, the intramolecular cleavage type photopolymerization initiator is preferably an acylphosphine oxide-based photopolymerization initiator.

Examples of acylphosphine oxide compounds include monoacylphosphine oxide compounds and bisacylphosphine oxide compounds, among which bisacylphosphine oxide compounds are preferred.

Examples of monoacylphosphine oxide compounds include isobutyryldiphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyldiphenylphosphine oxide, benzoyldiphenylphosphine oxide, pivaloylphenylphosphinic acid vinyl ester, adipoylbisdiphenylphosphine oxide, pivaloyldiphenylphosphine oxide, p-toluyldiphenylphosphine oxide, 4-(t-butyl)benzoyldiphenylphosphine oxide, terephthaloylbisdiphenylphosphine oxide, 2-methylbenzoyldiphenylphosphine oxide, versatoyldiphenylphosphine oxide, 2-methyl-2-ethylhexanoyldiphenylphosphine oxide, 1-methyl-cyclohexanoyldiphenylphosphine oxide, pivaloylphenylphosphinic acid methyl ester, and pivaloylphenylphosphinic acid isopropyl ester.

Examples of bisacylphosphine oxide compounds include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, the acylphosphine oxide compound is preferably bis(2,4,6-trimethylbenzoyl)phenylphosphine oxide (the product name "Omnirad 819", manufactured by IGM Resins B.V), 2,4,6-trimethylbenzoyldiphenylphosphine oxide (the product name "Omnirad TPO H", manufactured by IGM Resins B.V), or (2,4,6-trimethylbenzoyl)ethoxyphenylphosphine oxide (the product name "Omnirad TPO-L", manufactured by IGM Resins B.V).

The intramolecular abstraction type photopolymerization initiator may be, for example, a thioxanthone compound.

Examples of thioxanthone compounds include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboximide, n-octylthioxanthone-3,4-dicarboximide, N-(1,1,3,3-tetramethylbutyl)thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yloxy)-N,N,N-trimethyl-1 -propanaminium chloride.

The thioxanthone compound may be a commercially available product. Examples of commercially available products include the SPEEDCURE series manufactured by Lambson Ltd. (e.g., SPEEDCURE 7010, SPEEDCURE CPTX, and SPEEDCURE ITX).

The intramolecular hydrogen abstraction type photopolymerization initiator preferably has a number average molecular weight of 1,000 or more. The upper limit of the number average molecular weight is, for example, but not particularly limited to, 3,000. When the number average molecular weight is 1,000 or more, bleeding out from the film to be formed is less likely to occur, and migration is reduced.

From the viewpoint of reducing migration, the photoradical generator preferably includes both an intramolecular cleavage type photopolymerization initiator and an intramolecular hydrogen abstraction type photopolymerization initiator. The mass ratio of the intramolecular cleavage type photopolymerization initiator to the intramolecular hydrogen abstraction type photopolymerization initiator (intramolecular cleavage type photopolymerization initiator:intramolecular hydrogen abstraction type photopolymerization initiator) in the photoradical generator is preferably 50:50 to 95:5, and more preferably 70:30 to 90:10.

The proportion of the number of moles of the photoradical generator relative to the number of moles of the ethylenic double bonds in the particles in the aqueous dispersion of the present disclosure is 4 mol% or more. When the proportion of the number of moles of the photoradical generator relative to the number of moles of the ethylenic double bonds is 4 mol% or more, a large number of radicals are generated, and the crosslink density is improved. Therefore, migration is reduced, and the film to be formed has excellent rubfastness.

From the viewpoint of further reducing migration and further improving the rubfastness of the film to be formed, the proportion of the number of moles of the photoradical generator relative to the number of moles of the ethylenic double bonds is preferably 5 mol% to 40 mol%, and more preferably 7 mol% to 30 mol%. When the proportion of the number of moles of the photoradical generator relative to the number of moles of the ethylenic double bonds is 40 mol% or less, a high degree of polymerization is achieved, and the crosslink density is improved. Therefore, migration is reduced, and the film to be formed has excellent rubfastness.

The proportion of the number of moles of the photoradical generator present as a solid relative to the total number of moles of the photoradical generator in the particles in the aqueous dispersion of the present disclosure is 5 mol% or less. "The proportion of the number of moles of the photoradical generator present as a solid relative to the total number of moles of the photoradical generator is 5 mol% or less" means that the proportion of the photoradical generator in a solid state in the particles is small. The lower limit of the above proportion is not particularly limited, and the above proportion is preferably 0 mol%. That is, it is preferred that all of the photoradical generator be present as a liquid in the particles.

"The photoradical generator present as a solid in the particles" means a state in which the photoradical generator is not dissolved in the liquid included in the particles. Therefore, to reduce the proportion of the photoradical generator present as a solid in the particles, it is preferred that a liquid that easily dissolves the radical generator be selected as the liquid included in the particles. In addition, it is preferred that a photoradical generator that is liquid at 25°C be selected as the photoradical generator.

The proportion of the number of moles of the photoradical generator present as a solid relative to the total number of moles of the photoradical generator can be calculated by the following method.

The amounts of the photoradical generator and the liquid included in the specific particles are measured, and the mass ratio of the photoradical generator to the liquid is calculated. The photoradical generator and the liquid are mixed and stirred in the calculated mass ratio at 25°C. The amount of the photoradical generator that has not been dissolved in the liquid is measured. The proportion of the number of moles of the photoradical generator that has not been dissolved in the liquid relative to the total number of moles of the photoradical generator mixed with the liquid is calculated.

The content of the photoradical generator is preferably 4% by mass to 30% by mass, more preferably 5% by mass to 25% by mass, and even more preferably 6% by mass to 20% by mass, relative to the total solid content of the specific particles from the viewpoint of dispersion stability.

HSP Distance between Resin and Photoradical Generator

The HSP distance between the resin and the photoradical generator in the aqueous dispersion of the present disclosure is preferably 5.5 $MPa^{1/2}$ or less, and more preferably 4.5 $MPa^{1/2}$ or less. The lower limit of the above HSP distance is, for example, but not particularly limited to, 0.1 $MPa^{1/2}$.

When the above HSP distance is 5.5 $MPa^{1/2}$ or less, the resin and the photoradical generator have high compatibility, which results in excellent preservation stability.

Specifically, the HSP distance is a value determined by equation (X1) below.

$$\text{HSP distance} = \Sigma(\Delta HSP(R_k - P_i) \times m_k \times m_i) \ldots \text{equation (X1)}$$

In equation (X1),

k and i each independently represent an integer of 1 or more,
$m_k$ represents the mass fraction (i.e., a value of more than 0 and less than 1) of the k-th photoradical generator relative to the total amount of photoradical generator contained in the aqueous dispersion,
mi represents the mass fraction (i.e., a value of more than 0 and less than 1) of the i-th resin relative to the total amount of resin contained in the aqueous dispersion, and
$\Delta HSP(R_k - P_i)$ represents the HSP distance between the k-th photoradical generator and the i-th resin.

The HSP distance is a value that correlates with the compatibility between two substances to be compared (hereinafter referred to as "substance 1" and "substance 2"). The smaller the HSP distance, the higher the compatibility between the substance 1 and the substance 2.

The HSP distance is calculated by substituting, into equation (A) below, 6D (dispersion term) (hereinafter referred to as 6Di and $\delta D_2$), $\delta P$ (polar term) (hereinafter referred to as $\delta P_1$ and $\delta P_2$), and $\delta H$ (hydrogen bonding term) (hereinafter referred to as $\delta H_1$ and $\delta H_2$) of the substance 1 and the substance 2.

Here, $\delta D$ (dispersion term), $\delta P$ (polar term), and $\delta H$ (hydrogen bonding term) are three parameters constituting HSP (i.e., Hansen solubility parameters).

For example, $\Delta HSP(R_k - P_i)$ is calculated by substituting, into equation (A) below, the dispersion term of the k-th photoradical generator as $\delta D_1$, the polar term of the k-th photoradical generator as $\delta P_1$, the hydrogen bonding term of the k-th photoradical generator as $\delta H_1$, the dispersion term of the i-th resin as $\delta D_2$, the polar term of the i-th resin as $\delta P_2$, and the hydrogen bonding term of the i-th resin as $\delta H_2$.

$$\text{HSP distance} = \sqrt{4(\delta D_1 - \delta D_2)^2 + (\delta P_1 - \delta P_2)^2 + (\delta H_1 - \delta H_2)^2} \quad \cdots \text{equation (A)}$$

The dispersion term (hereinafter referred to as "δD (resin i)"), the polar term (hereinafter referred to as "δP (resin i)"), and the hydrogen bonding term (hereinafter referred to as "δH (resin i)") of the i-th resin are determined based on the method of K. W. Suh and J. M. Corbett described in Journal of Applied Polymer Science, 12, p. 2359 (1968).

Specifically, δD (resin i), δP (resin i), and δH (resin i) are determined by the following method.

After 500 mg of a sample (i.e., the resin i) is completely dissolved in 10 mL of tetrahydrofuran (THF), deionized water is added dropwise to the resulting solution until the solution becomes cloudy. The volume fraction [deionized water/(deionized water + THF)] at which the solution becomes cloudy is determined as Vw.

After 500 mg of a sample (i.e., the resin i) is completely dissolved in 10 mL of tetrahydrofuran (THF), hexane is added dropwise to the resulting solution until the solution becomes cloudy. The volume fraction [hexane/(hexane + THF)] at which the solution becomes cloudy is determined as Vh.

Using Vw and Vh thus determined, δD (resin i), δP (resin i), and δH (resin i) are calculated by equations (D1), (P1), and (H1) below, respectively.

$$\delta D \text{ (resin i)} = [Vw^{1/2} \times \delta D\,(W/T) + Vh^{1/2} \times \delta D\,(H/T)]/[Vw^{1/2} + Vh^{1/2}] \ldots \text{equation (D1)}$$

$$\delta P \text{ (resin i)} = [Vw^{1/2} \times \delta P\,(W/T) + Vh^{1/2} \times \delta P\,(H/T)]/[Vw^{1/2} + Vh^{1/2}] \ldots \text{equation (P1)}$$

$$\delta H \text{ (resin i)} = [Vw^{1/2} \times \delta H\,(W/T) + Vh^{1/2} \times \delta H\,(H/T)]/[Vw^{1/2} + Vh^{1/2}] \ldots \text{equation (H1)}$$

In equation (D1), the following parameters are values determined by the equations below:

$$\delta D\ (W/T) = \delta D\ (THF) \times (1 - Vw) + \delta D\ (water) \times Vw$$

$$\delta D\ (H/T) = \delta D\ (THF) \times (1 - Vh) + \delta D\ (hexane) \times Vh$$

$$\delta P\ (W/T) = \delta P\ (THF) \times (1 - Vw) + \delta P\ (water) \times Vw$$

$$\delta P\ (H/T) = \delta P\ (THF) \times (1 - Vh) + \delta P\ (hexane) \times Vh$$

$$\delta H\ (W/T) = \delta H\ (THF) \times (1 - Vw) + \delta H\ (water) \times Vw$$

$$\delta H\ (H/T) = \delta H\ (THF) \times (1 - Vh) + \delta H\ (hexane) \times Vh$$

In the above equations, the following values are used as the following parameters:

$$\delta D\ (THF) = 16.8$$

$$\delta D\ (water) = 15.5$$

$$\delta D\ (hexane) = 14.9$$

$$\delta P\ (THF) = 5.7$$

$$\delta P\ (water) = 16$$

$$\delta P\ (hexane) = 0$$

$$\delta H\ (THF) = 8$$

$$\delta H\ (water) = 42.3$$

$$\delta H \text{ (hexane)} = 0$$

The dispersion term, the polar term, and the hydrogen bonding term of the radical generator are calculated in the same manner as the dispersion term, the polar term, and the hydrogen bonding term of the resin.

The specific particles included in the aqueous dispersion may include components other than the resin and the photoradical generator.

Polymerizable Monomer

The specific particles preferably include at least one polymerizable monomer.

In the present disclosure, "polymerizable monomer" means a monomer having a polymerizable group and not having the amino group A, and is distinguished from the compound having the amino group A.

The polymerizable monomer contributes to improving the rubfastness of the film to be formed by linking the specific particles to each other when the aqueous dispersion applied onto the substrate is cured.

As the polymerizable monomer included in the specific particles, compounds described in paragraphs 0097 to 0105 of WO2016/052053A may be used.

The polymerizable monomer that can be included in the specific particles is preferably a photopolymerizable monomer, and more preferably a photoradical polymerizable monomer.

The photopolymerizable monomer is a compound having the property of polymerizing when irradiated with light.

The polymerizable monomer preferably has a molecular weight of 100 to 4,000, more preferably 100 to 2,000, more preferably 100 to 1,000, more preferably 100 to 900, more preferably 100 to 800, and particularly preferably 150 to 750.

The molecular weight of the polymerizable monomer can be calculated based on the types and number of elements constituting the polymerizable monomer.

The preferred form of the polymerizable group of the polymerizable monomer is similar to the preferred form of the polymerizable group that can be included in the above resin.

The photopolymerizable monomer is preferably a compound including an ethylenic double bond.

Examples of photopolymerizable monomers include acrylate compounds, methacrylate compounds, styrene compounds, vinylnaphthalene compounds, N-vinyl heterocyclic compounds, unsaturated polyesters, unsaturated polyethers, unsaturated polyamides, and unsaturated urethanes.

Examples of acrylate compounds include monofunctional acrylate compounds such as 2-hydroxyethyl acrylate, butoxyethyl acrylate, carbitol acrylate, cyclohexyl acrylate, tetrahydrofurfuryl acrylate, benzyl acrylate, tridecyl acrylate, 2-phenoxyethyl acrylate (PEA), bis(4-acryloxypolyethoxyphenyl)propane, oligoester acrylate, epoxy acrylate, isobornyl acrylate (IBOA), dicyclopentenyl acrylate, dicyclopentenyloxyethyl acrylate, dicyclopentanyl acrylate, cyclic trimethylolpropane formal acrylate, 2-(2-ethoxyethoxy)ethyl acrylate, 2-(2-vinyloxyethoxy)ethyl acrylate, octyl acrylate, decyl acrylate, isodecyl acrylate, lauryl acrylate, 3,3,5-trimethylcyclohexyl acrylate, 4-t-butylcyclohexyl acrylate, isoamyl acrylate, stearyl acrylate, isostearyl acrylate, 2-ethylhexyl diglycol acrylate, 2-hydroxybutyl acrylate, 2-acryloyloxyethylhydrophthalic acid, ethoxydiethylene glycol acrylate, methoxydiethylene glycol acrylate, methoxypolyethylene glycol acrylate, methoxypropylene glycol acrylate, 2-hydroxy-3-phenoxypropyl acrylate, vinyl ether acrylate, 2-acryloyloxyethylsuccinic acid, 2-acryloyloxyphthalic acid, 2-acryloxyethyl-2-hydroxyethylphthalatic acid, lactone-modified acrylates, acryloylmorpholine, acrylamide, and substituted acrylamides (e.g., N-methylolacrylamide and diacetone acrylamide);

difunctional acrylate compounds such as polyethylene glycol diacrylate, polypropylene glycol diacrylate, polytetramethylene glycol diacrylate, 1,3-butylene glycol diacrylate, 1,4-butanediol diacrylate, 1,6-hexanediol diacrylate (HDDA), 1,9-nonanediol diacrylate (NDDA), 1,10-decanediol diacrylate (DDDA), 3-methylpentanediol diacrylate (3MPDDA), neopentyl glycol diacrylate, tricyclodecanedimethanol diacrylate, bisphenol A ethylene oxide (EO) adduct diacrylate, bisphenol A propylene oxide (PO) adduct diacrylate, ethoxylated bisphenol A diacrylate, hydroxyneopentyl glycol diacrylate, propoxylated neopentyl glycol diacrylate, alkoxylated dimethyloltricyclodecane diacrylate, polytetramethylene glycol diacrylate, alkoxylated cyclohexanonedimethanol diacrylate, alkoxylated hexanediol diacrylate, dioxane glycol diacrylate, cyclohexanonedimethanol diacrylate, diethylene glycol diacrylate, neopentyl glycol diacrylate, tetraethylene glycol diacrylate, dipropylene glycol diacrylate, tripropylene glycol diacrylate (TPGDA), and neopentyl glycol propylene oxide adduct diacrylate; and

tri- or higher-functional acrylate compounds such as trimethylolpropane triacrylate, pentaerythritol triacrylate, dipentaerythritol tetraacrylate, ethoxylated isocyanuric acid triacrylate, ε-caprolactone-modified tris-(2-acryloxyethyl) isocyanurate, ditrimethylolpropane tetraacrylate, dipentaerythritol pentaacrylate, dipentaerythritol hexaacrylate, ethoxylated trimethylolpropane triacrylate, propoxylated trimethylolpropane triacrylate, caprolactone-modified trimethylolpropane triacrylate, pentaerythritol tetraacrylate, pentaerythritol ethoxy tetraacrylate, glycerol propoxy triacrylate, ethoxylated dipentaerythritol hexaacrylate, caprolactam-modified dipentaerythritol hexaacrylate, propoxylated glycerol triacrylate, ethoxylated trimethylolpropane triacrylate, and propoxylated trimethylolpropane triacrylate.

Examples of methacrylate compounds include monofunctional methacrylate compounds such as methyl methacrylate, n-butyl methacrylate, allyl methacrylate, glycidyl methacrylate, benzyl methacrylate, dimethylaminomethyl methacrylate, methoxypolyethylene glycol methacrylate, methoxytriethylene glycol methacrylate, hydroxyethyl methacrylate, phenoxyethyl methacrylate, and cyclohexyl methacrylate; and

difunctional methacrylate compounds such as polyethylene glycol dimethacrylate, polypropylene glycol dimethacrylate, 2,2-bis(4-methacryloxypolyethoxyphenyl)propane, and tetraethylene glycol dimethacrylate.

Examples of styrene compounds include styrene, p-methylstyrene, p-methoxystyrene, β-methylstyrene, p-methyl-β-methylstyrene, α-methylstyrene, and p-methoxy-β-methylstyrene.

Examples of vinylnaphthalene compounds include 1-vinylnaphthalene, methyl-1-vinylnaphthalene, β-methyl-1-vinylnaphthalene, 4-methyl-1-vinylnaphthalene, and 4-methoxy-1-vinylnaphthalene.

Examples of N-vinyl heterocyclic compounds include N-vinylcarbazole, N-vinylpyrrolidone, N-vinylethylacetamide, N-vinylpyrrole, N-vinylphenothiazine, N-vinylacetanilide, N-vinylethylacetamide, N-vinylsuccinimide, N-vinylphthalimide, N-vinylcaprolactam, and N-vinylimidazole.

Examples of other polymerizable monomers include allyl glycidyl ether, diallyl phthalate, triallyl trimellitate, and N-vinylamides such as N-vinylformamide.

Among these, from the viewpoint of further improving the adhesiveness between the film and the substrate, the polymerizable monomer that can be included in the specific particles preferably includes a polymerizable monomer having a ring structure.

Examples of monofunctional polymerizable monomers having a ring structure include 2-phenoxyethyl acrylate, cyclohexyl acrylate, tetrahydrofurfuryl acrylate, benzyl acrylate, isobornyl acrylate, dicyclopentenyl acrylate, dicyclopentenyloxyethyl acrylate, dicyclopentanyl acrylate, ethoxylated isocyanuric acid triacrylate, and ε-caprolactone-modified tris-(2-acryloxyethyl) isocyanurate.

In addition, examples of difunctional polymerizable monomers having a ring structure include tricyclodecanedimethanol di(meth)acrylate, bisphenol A ethylene oxide (EO) adduct di(meth)acrylate, bisphenol A propylene oxide (PO) adduct di(meth)acrylate, ethoxylated bisphenol A di(meth)acrylate, alkoxylated dimethyloltricyclodecane di(meth)acrylate, alkoxylated cyclohexanonedimethanol di(meth)acrylate, and cyclohexanonedimethanol di(meth)acrylate.

In addition to the polymerizable monomers mentioned above, commercially available products described in Shinzo Yamashita, "Crosslinking Agent Handbook" (1981, Taiseisha); Kiyomi Kato, "UV/EB Curing Handbook (Raw Materials)" (1985, Kobunshi Kankokai); RadTech Japan, "Applications and Markets of UV/EB Curing Technology", p. 79 (1989, CMC); and Eiichiro Takiyama, "Polyester Resin Handbook" (1988, Nikkan Kogyo Shimbun, Ltd.) as well as radical polymerizable monomers known in the art can be used.

In addition, as the photopolymerizable monomer, photocurable polymerizable monomers used in photopolymerizable compositions described in publications such as JP1995-159983A (JP-H07-159983A), JP1995-031399B (JP-H07-031399B), JP1996-224982A (JP-H08-224982A), JP1998-000863A (JP-H10-000863A), JP1997-134011A (JP-H09-134011A), and JP2004-514014A are known, and they can also be used as the polymerizable monomer that can be included in the specific particles.

As the photopolymerizable monomer, commercially available products that have been marketed may also be used.

Examples of commercially available products of photopolymerizable monomers include AH-600 (difunctional), AT-600 (difunctional), UA-306H (hexafunctional), UA-306T (hexafunctional), UA-306I (hexafunctional), UA-510H (decafunctional), LTF-8001G (difunctional), DAUA-167 (difunctional), Light Acrylate NPA (difunctional), and Light Acrylate 3EG-A (difunctional) (Kyoeisha Chemical Co., Ltd.); SR339A (PEA, monofunctional), SR506 (IBOA, monofunctional), CD262 (difunctional), SR238 (HDDA, difunctional), SR341 (3MPDDA, difunctional), SR508 (difunctional), SR306H (difunctional), CD560 (difunctional), SR833S (difunctional), SR444 (trifunctional), SR454 (trifunctional), SR492 (trifunctional), SR499 (trifunctional), CD501 (trifunctional), SR502 (trifunctional), SR9020 (trifunctional), CD9021 (trifunctional), SR9035 (trifunctional), SR494 (tetrafunctional), and SR399E (pentafunctional) (Sartomer Company, Inc.); A-NOD-N (NDDA, difunctional), A-DOD-N (DDDA, difunctional), A-200 (difunctional), APG-400 (difunctional), A-BPE-10 (difunctional), A-BPE-20 (difunctional), A-9300 (trifunctional), A-9300-1CL (trifunctional), A-TMPT (trifunctional), A-TMM-3L (trifunctional), A-TMMT (tetrafunctional), and AD-TMP (tetrafunctional) (Shin-Nakamura Chemical Co., Ltd.); UV-7510B (trifunctional) (Nippon Synthetic Chemical Industry Co., Ltd.); and KAYARAD DPCA-30 (hexafunctional) and KAYARAD DPEA-12 (hexafunctional) (Nippon Kayaku Co., Ltd.).

In addition, commercially available products such as NPGPODA (neopentyl glycol propylene oxide adduct diacrylate), SR531, SR285, and SR256 (Sartomer Company, Inc.), A-DHP (dipentaerythritol hexaacrylate, Shin-Nakamura Chemical Co., Ltd.), Aronix (registered trademark) M-156 (Toagosei Co., Ltd.), V-CAP (BASF), and Viscoat #192 (Osaka Organic Chemical Industry Ltd.) are suitable for use as the polymerizable monomer.

The content of the polymerizable monomer is preferably 5% by mass to 75% by mass, more preferably 10% by mass to 65% by mass, even more preferably 15% by mass to 55% by mass, and particularly preferably 20% by mass

to 50% by mass, relative to the total solid content of the specific particles.

Compound Having Amino Group A

The specific particles preferably include at least one compound having an amino group A having a hydrogen atom on the carbon atom at the α-position.
The compound having the amino group A has a molecular weight of 1,000 or less and is distinguished from the above resin having the amino group A.
When the specific particles include the compound having the amino group A, inhibition of polymerization due to oxygen is reduced, and the polymerization of the particles having a polymerizable group proceeds efficiently. Therefore, migration is reduced, and the film to be formed has excellent rubfastness.
The proportion of the number of moles of the compound, having the amino group, that is present as a solid relative to the total number of moles of the compound having the amino group A in the particles is preferably 5 mol% or less. The lower limit of the above proportion is not particularly limited, and the above proportion is preferably 0 mol%. That is, it is preferred that all of the compound having the amino group A be present as a liquid in the particles.
"The compound, having the amino group A, that is present as a solid in the particles" means a state in which the compound having the amino group A is not dissolved in the liquid included in the particles. Therefore, to reduce the proportion of the compound, having the amino group A, that is present as a solid in the particles, it is preferred that a liquid that easily dissolves the compound having the amino group A be selected as the liquid included in the particles. In addition, it is preferred that a compound that is liquid at 25°C be selected as the compound having the amino group A.
The proportion of the number of moles of the compound, having the amino group, that is present as a solid relative to the total number of moles of the compound having the amino group A can be calculated in the same manner as the proportion of the number of moles of the photoradical generator present as a solid relative to the total number of moles of the photoradical generator.
The compound having the amino group A preferably has one to six amino groups A, more preferably one to three amino groups A, and even more preferably one or two amino groups A.
From the viewpoint of further reducing migration, the compound having the amino group A preferably further has a polymerizable group, and more preferably has a (meth)acryloyl group.
The compound having the amino group A may be a commercially available product.
Examples of commercially available products include:

LA-52, LA-63P, and LA-72 (manufactured by ADEKA Corporation);
CN371 (manufactured by Sartomer Company, Inc.); and
Exacure A198, Omnirad 907, Omnirad 369, Omnirad 379, Omnipol ASA, and Omnipol 910 (manufactured by IGM Resins B.V.)

The content of the compound having the amino group A is preferably 0.1% by mass to 12% by mass, and more preferably 0.5% by mass to 10% by mass, relative to the total solid content of the specific particles.

HSP Distance between Photoradical Generator and Compound Having Amino Group A

The HSP distance between the photoradical generator and the compound having the amino group A in the aqueous dispersion of the present disclosure is preferably 6 $MPa^{1/2}$ or less, and more preferably 5 $MPa^{1/2}$ or less. The lower limit of the above HSP distance is, for example, but not particularly limited to, 0.1 $MPa^{1/2}$.
When the above HSP distance is 6 $MPa^{1/2}$ or less, the reactivity between the photoradical generator and the compound having the amino group A is improved, and thus migration is further reduced.
The HSP distance between the photoradical generator and the compound having the amino group A is calculated in the same manner as the HSP distance between the resin and the photoradical generator described above.

Other Components

The specific particles may contain other components in addition to the above components. Examples of other components include organic solvents.
The specific particles preferably include a component that is liquid at 25°C (hereinafter also referred to as "liquid component"). The liquid component may be a photoradical generator or a polymerizable monomer. The content of the liquid component is preferably 10% by mass or more, more preferably 20% by mass or more, and even more preferably 30% by mass or more, relative to the total solid content of the specific particles from the viewpoint of promoting the polymerization reaction in the particles. The content of the liquid component is preferably 75% by mass or less, more

preferably 65% by mass or less, and even more preferably 55% by mass or less, relative to the total solid content of the specific particles from the viewpoint of reducing elution of the liquid component outside the particles and improving the preservation stability.

In addition, the liquid component preferably has a ClogP value of 1.5 or more, more preferably 2.0 or more, and even more preferably 3.0 or more, from the viewpoint of reducing elution of the liquid component outside the particles and improving the preservation stability.

In the present disclosure, the ClogP value is calculated using the fragment method. As calculation software using the fragment method, ChemDraw Professional 16 is used.

Water

The aqueous dispersion of the present disclosure contains water.

Water is a dispersion medium for the specific particles (dispersoid).

The content of water is preferably, but not particularly limited to, 10% by mass or more, more preferably 20% by mass or more, even more preferably 30% by mass or more, and particularly preferably 50% by mass or more, relative to the total amount of the aqueous dispersion.

In addition, the content of water is 99% by mass or less, more preferably 95% by mass or less, and even more preferably 90% by mass or less, relative to the total amount of the aqueous dispersion.

Other Components

The aqueous dispersion of the present disclosure may contain other components in addition to the specific particles and water. Examples of other components include colorants and water-soluble organic solvents. In addition, as other components, the aqueous dispersion of the present disclosure may contain additives that are commonly added to inks, such as surfactants, polymerization inhibitors, and ultraviolet absorbers. Other components may or may not be included in the specific particles.

In addition, the aqueous dispersion of the present disclosure may optionally contain a water-soluble polymerizable monomer, a water-soluble photoradical generator, a water-soluble resin, or the like outside the specific particles. For these components, reference can be made to, for example, paragraphs 0134 to 0157 of WO2016/052053A.

When the aqueous dispersion of the present disclosure contains a colorant, it is preferred that the aqueous dispersion of the present disclosure include the colorant outside the specific particles (i.e., the specific particles do not include the colorant).

The colorant is not particularly limited, and any colorant can be selected from known colorants such as pigments, water-soluble dyes, and disperse dyes and can be used. Among these, it is more preferred that the aqueous dispersion of the present disclosure include a pigment from the viewpoint of excellent weather resistance and high color reproducibility.

The pigment is not particularly limited and can be selected as appropriate depending on the purpose. Examples of pigments include known organic pigments and inorganic pigments and also include resin particles dyed with dyes and commercially available pigment dispersions and surface-treated pigments (e.g., pigments dispersed in dispersion media such as water, liquid compounds, and resins in which the pigments are insoluble and pigments surface-treated with materials such as resins and pigment derivatives).

Examples of organic pigments and inorganic pigments include yellow pigments, red pigments, magenta pigments, blue pigments, cyan pigments, green pigments, orange pigments, violet pigments, brown pigments, black pigments, and white pigments.

When a pigment is used as the colorant, a pigment dispersant may optionally be used.

In addition, when a pigment is used as the colorant, a self-dispersible pigment having a hydrophilic group on the surface of the pigment particles may be used as the pigment.

For colorants and pigment dispersants, reference can be made to paragraphs 0180 to 0200 of JP2014-040529A and paragraphs 0122 to 0129 of WO2016/052053A where appropriate.

When the aqueous dispersion of the present disclosure contains a colorant, the content of the colorant is preferably 0.1% by mass to 20% by mass, more preferably 0.5% by mass to 10% by mass, and particularly preferably 0.5% by mass to 5% by mass, relative to the total amount of the aqueous dispersion.

The aqueous dispersion of the present disclosure is suitable for use as an inkjet ink.

A preferred embodiment of the present disclosure may be an inkjet ink that contains water and particles including a resin and a photoradical generator and having a polymerizable group. The polymerizable group includes an ethylenic double bond. The proportion of the number of moles of the photoradical generator relative to the number of moles of the ethylenic double bonds in the particles is 4 mol% or more, and the proportion of the number of moles of the photoradical generator present as a solid relative to the total number of moles of the photoradical generator is 5 mol% or less.

When the aqueous dispersion of the present disclosure is used as an inkjet ink, the aqueous dispersion of the present disclosure preferably includes a water-soluble organic solvent outside the specific particles from the viewpoint of improving ejectability.
Here, "water-soluble" refers to the property of being soluble in an amount of more than 1 g in 100 g of distilled water at 25°C.
When the aqueous dispersion of the present disclosure contains a water-soluble organic solvent, the content of the water-soluble organic solvent is preferably 0.1% by mass to 30% by mass, and more preferably 1.0% by mass to 20% by mass, relative to the total amount of the aqueous dispersion.
Specific examples of water-soluble organic solvents are as follows:

· Alcohols (e.g., methanol, ethanol, propanol, isopropanol, butanol, isobutanol, secondary butanol, tertiary butanol, pentanol, hexanol, cyclohexanol, and benzyl alcohol)
· Polyhydric alcohols (e.g., ethylene glycol, diethylene glycol, triethylene glycol, polyethylene glycol, propylene glycol, dipropylene glycol, polypropylene glycol, butylene glycol, hexanediol, pentanediol, glycerol, hexanetriol, thiodiglycol, and 2-methylpropanediol)
· Polyhydric alcohol ethers (e.g., ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether)
· Amines (e.g., ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine)
· Amides (e.g., formamide, N,N-dimethylformamide, and N,N-dimethylacetamide)
Heterocyclic compounds (e.g., 2-pyrrolidone, N-methyl-2-pyrrolidone, cyclohexylpyrrolidone, 2-oxazolidone, 1,3-dimethyl-2-imidazolidinone, and γ-butyrolactone)
· Sulfoxide compounds (e.g., dimethyl sulfoxide)
· Sulfones (e.g., sulfolane)
· Other compounds (e.g., urea, acetonitrile, and acetone)

Use

The aqueous dispersion of the present disclosure is applicable to various uses.
For example, the aqueous dispersion of the present disclosure can be used as an ink such as an inkjet ink or a coating film forming composition. In particular, the aqueous dispersion of the present disclosure is suitable for use as an inkjet ink.

Method for Producing Aqueous Dispersion

A method for producing the aqueous dispersion of the present disclosure is not particularly limited.
The method for producing the aqueous dispersion includes, for example, a step of mixing together an oil phase component including an organic solvent, a resin, and a photoradical generator and an aqueous phase component including water and emulsifying the mixture to obtain an aqueous dispersion of the specific particles.
In the step of obtaining the aqueous dispersion of the specific particles, the oil phase component and the aqueous phase component described above are mixed together, and the resulting mixture is emulsified to form the specific particles. The thus-formed specific particles function as a dispersoid in the aqueous dispersion to be produced.
The water in the aqueous phase component functions as a dispersion medium in the aqueous dispersion to be produced.
Examples of organic solvents included in the oil phase component include ethyl acetate and methyl ethyl ketone.
It is preferred that at least a portion of the organic solvent be removed in the process of forming the specific particles or after the formation of the specific particles.
The oil phase component may contain, for example, a polymerizable monomer and a compound having an amino group A in addition to the above components.
The aqueous phase component is not particularly limited except that the aqueous phase component includes water.
The aqueous phase component may include a neutralizer for neutralizing at least some of the hydrophilic groups of the resin.

Examples of neutralizers include alkali metal hydroxides (e.g., sodium hydroxide and potassium hydroxide) and organic amines (e.g., triethylamine).

The aqueous phase component may include components other than water and the neutralizer.

The total amount of the oil phase component and the aqueous phase component excluding the organic solvent and water in the method for producing the aqueous dispersion corresponds to the total solid content of the specific particles in the aqueous dispersion to be produced.

For the preferred range of the amount of each component that can be used in the method for producing the aqueous dispersion, reference can be made to the "Specific Particles" section described above. In this reference, "content" and "the total solid content of the specific particles" in the "Specific Particles" section described above are read as "amount used" and "the total amount of the oil phase component and the aqueous phase component excluding the organic solvent and water", respectively.

Although the method of mixing together the oil phase component and the aqueous phase component in the step of obtaining the aqueous dispersion of the specific particles is not particularly limited, they may be mixed together, for example, by stirring.

Although the method of emulsification in the step of obtaining the aqueous dispersion of the specific particles is not particularly limited, the mixture may be emulsified, for example, using an emulsification device (e.g., a disperser) such as a homogenizer.

The rotational speed of the disperser for emulsification is, for example, 5,000 rpm to 20,000 rpm, and preferably 10,000 rpm to 15,000 rpm.

The rotation time for emulsification is, for example, 1 minute to 120 minutes, preferably 3 minutes to 60 minutes, more preferably 3 minutes to 30 minutes, and even more preferably 5 minutes to 15 minutes.

Emulsification may be performed with heating in the step of obtaining the aqueous dispersion of the specific particles.

By performing emulsification with heating, the specific particles can be more efficiently formed.

In addition, by performing emulsification with heating, at least a portion of the organic solvent in the oil phase component can be easily removed from the mixture.

When emulsification is performed with heating, the heating temperature is preferably 35°C to 70°C, and more preferably 40°C to 60°C.

In addition, the step of obtaining the aqueous dispersion of the specific particles may include an emulsification step of emulsifying the mixture (e.g., at a temperature of lower than 35°C) and a heating step of heating the emulsion obtained in the emulsification step (e.g., at a temperature of 35°C or higher).

In the embodiment in which the step of obtaining the aqueous dispersion of the specific particles includes the emulsification step and the heating step, the specific particles can be more efficiently formed, particularly in the heating step.

In addition, in the embodiment in which the step of obtaining the aqueous dispersion of the specific particles includes the emulsification step and the heating step, at least a portion of the organic solvent in the oil phase component can be easily removed from the mixture, particularly in the heating step.

The heating temperature in the heating step is preferably 35°C to 70°C, more preferably 40°C to 60°C.

The heating time in the heating step is preferably 6 hours to 50 hours, more preferably 12 hours to 40 hours, and even more preferably 15 hours to 35 hours.

In addition, the method for producing the aqueous dispersion may optionally include other steps in addition to the step of obtaining the aqueous dispersion of the specific particles.

Examples of other steps include steps of adding other components (e.g., a colorant) after the step of obtaining the aqueous dispersion of the specific particles.

Film Forming Method

A preferred embodiment of a film forming method using the aqueous dispersion of the present disclosure described above (hereinafter also referred to as "film forming method X") is as follows.

The film forming method X includes:

a step of applying the aqueous dispersion of the present disclosure onto a substrate (hereinafter also referred to as "application step"); and
a step of curing the aqueous dispersion applied onto the substrate (hereinafter also referred to as "curing step").

The film forming method X may optionally include other steps.

The film forming method X forms a film having excellent abrasion resistance and excellent adhesiveness to substrates.

Substrate

The substrate used in the film forming method X is not particularly limited, and may be an impermeable substrate or a permeable substrate, preferably an impermeable substrate.
Specifically, there is a great need for improving the abrasion resistance and adhesiveness of a film when the film is formed on an impermeable substrate using an aqueous composition. Accordingly, this need can be satisfied when an impermeable substrate is used as the substrate used in the film forming method Xis.
Here, "impermeable substrate" refers to a substrate having a water absorption rate of less than 10 (unit: % by mass, measurement time: 24 hours) as measured in accordance with an ASTM test method, namely, ASTM D570.
The impermeable substrate preferably has a water absorption rate of 5 or less.
Examples of impermeable substrates include paper laminated with plastics (e.g., polyethylene, polypropylene, and polystyrene), metal plates (e.g., plates of metals such as aluminum, zinc, and copper), plastic films (e.g., films of plastics such as polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinyl acetal, and acrylic resin), paper laminated or coated by vapor deposition with the metals mentioned above, plastic films laminated or coated by vapor deposition with the metals mentioned above, and leather.
Examples of leather include natural leather (also referred to as "genuine leather") and synthetic leather (e.g., polyvinyl chloride (PVC) leather and polyurethane (PU) leather). For leather, reference can be made to, for example, paragraphs 0163 to 0165 of JP2009-058750A.
For example, there is a need for forming a film with excellent abrasion resistance and adhesiveness when the film is formed on leather (e.g., a vehicle seat, a bag, a shoe, or a purse) or a plastic film as an impermeable substrate.
In addition, in some cases, there is a need for forming a film with excellent rubfastness when the film is formed on a substrate other than leather or a plastic film.
Such needs can be satisfied by the film forming method of the present disclosure.
The substrate may be subjected to surface treatment from the viewpoint of improving the surface energy.
Examples of surface treatment include, but not limited to, corona treatment, plasma treatment, flame treatment, heat treatment, abrasion treatment, light irradiation treatment (UV treatment), and flame treatment.

Application Step

The application step is a step of applying the aqueous dispersion of the present disclosure onto the substrate.
The method for applying the aqueous dispersion is not particularly limited and may be, for example, a known method such as a coating method, an ink jet recording method, or a dipping method.
The application of the aqueous dispersion by an ink jet recording method can be performed by ejecting the aqueous dispersion from an inkjet head of a known inkjet recording apparatus.
The ink jet head is preferably a piezoelectric ink jet head.
The inkjet head preferably has a resolution of 300 dpi or more, more preferably 600 dpi or more, and even more preferably 800 dpi or more.
Here, dpi (dot per inch) represents the number of dots per 2.54 cm (1 inch).
The droplet ejection volume (droplet ejection volume per dot) of the aqueous dispersion ejected from the inkjet head is preferably 1 pL (picoliter) to 100 pL, more preferably 3 pL to 80 pL, and even more preferably 3 pL to 50 pL.
In the application step, the aqueous dispersion may be applied to a substrate being heated.
In this case, it is preferred to satisfy at least one of including a step of heating the substrate before the application step or heating the substrate and applying the ink in the application step.
In this case, the temperature of the surface of the substrate on which the aqueous dispersion lands is preferably 30°C or higher, more preferably 30°C to 100°C, and even more preferably 30°C to 70°C.
The heating means for heating the substrate is not particularly limited and may be, for example, a heat drum, hot air, an infrared lamp, an infrared LED, an infrared heater, a heat oven, a hot plate, an infrared laser, or an infrared dryer.

Curing Step

The curing step in the film forming method X is a step of curing the aqueous dispersion applied onto the substrate.
This curing step causes the particles having a polymerizable group in the aqueous dispersion applied onto the substrate to undergo a polymerization reaction. Thus, a film having excellent rubfastness is obtained.
The curing step is preferably a step of irradiating the aqueous dispersion applied onto the substrate with active energy radiation.
Examples of active energy radiation include ultraviolet radiation (UV light), visible light, and electron beams.

Among these, the active energy radiation is preferably UV light.

The irradiation of the aqueous dispersion applied onto the substrate with active energy radiation may be performed while the substrate and the aqueous dispersion applied onto the substrate are being heated.

The irradiation energy (i.e., exposure dose) of active energy radiation is preferably 20 mJ/cm$^2$ to 5 J/cm$^2$, and more preferably 100 mJ/cm$^2$ to 1,500 mJ/cm$^2$.

The time of irradiation with active energy radiation is preferably 0.01 seconds to 120 seconds, and more preferably 0.1 seconds to 90 seconds.

As the conditions and basic method of irradiation with active energy radiation, the conditions and method of irradiation disclosed in JP1985-132767A (JP-S60-132767A) can be used.

Examples of light sources for irradiation with active energy radiation include mercury lamps, metal halide lamps, high-pressure mercury lamps, medium-pressure mercury lamps, low-pressure mercury lamps, ultraviolet fluorescent lamps, gas lasers, solid-state lasers, light-emitting diodes (LEDs), and laser diodes (LDs).

Among these, the light source for irradiation with active energy radiation is preferably a light source for irradiation with ultraviolet radiation, i.e., a metal halide lamp, a high-pressure mercury lamp, a medium-pressure mercury lamp, a low-pressure mercury lamp, or an ultraviolet LED (hereinafter also referred to as UV-LED).

The peak wavelength of ultraviolet radiation is preferably, for example, 200 nm to 405 nm, more preferably 220 nm to 400 nm, and even more preferably 340 nm to 400 nm.

The peak wavelength of light from an LED light source (LED light) is preferably 200 nm to 600 nm, more preferably 300 nm to 450 nm, even more preferably 320 nm to 420 nm, and still more preferably 340 nm to 400 nm.

Examples of UV-LEDs include UV-LEDs manufactured by Nichia Corporation that have main emission spectra at wavelengths between 365 nm and 420 nm.

Other examples include UV-LEDs described in the specification of US6084250B that can emit active radiation centered between 300 nm and 370 nm.

In addition, several UV-LEDs can be used in combination to perform irradiation with ultraviolet radiation in different wavelength ranges.

Particularly preferred active energy radiation is LED light, particularly preferably LED light having a peak wavelength in the wavelength range of 340 nm to 405 nm.

For example, LED light having a peak wavelength at 355 nm, 365 nm, 385 nm, 395 nm, or 405 nm is more preferred, and LED light having a peak wavelength at 355 nm, 365 nm, 385 nm, 395 nm, or 405 nm is particularly preferred.

The maximum illuminance of the LED over the substrate is preferably 10 mW/cm$^2$ to 2,000 mW/cm$^2$, more preferably 20 mW/cm$^2$ to 1,000 mW/cm$^2$, and even more preferably 50 mW/cm$^2$ to 800 mW/cm$^2$.

In addition, as described above, the aqueous dispersion of the present disclosure is preferably an ink jet ink. A preferred embodiment of the present disclosure may be an image recording method including a step of applying the inkjet ink onto a substrate and a step of curing the ink jet ink applied onto the substrate. Details of the individual steps in the image recording method are similar to those of the individual steps in the film forming method.

Examples

Hereinafter, the present disclosure will be specifically described with reference to Examples, although the present disclosure is not limited to the following Examples.

Synthesis of Resin

Polymer PU1

Dimethylolpropionic acid (DMPA) (8.1 g), isophorone diisocyanate (IPDI) (30.4 g), DURANOL T5652 (polycarbonate diol manufactured by Asahi Kasei Corporation) (21.4 g), bisphenol A epoxy diacrylate (28.8 g), and methyl ethyl ketone (57.1 g) were placed into a three-necked flask, and the mixture was heated to 70°C. To the flask was added 0.1 g of NEOSTANN U-600 (inorganic bismuth catalyst manufactured by Nitto Kasei Co., Ltd.; hereinafter also referred to as "U-600"), and the mixture was stirred at 70°C for 7 hours. Next, isopropanol (IPA) (62.1 g), serving as an end-capping agent, and ethyl acetate (87.7 g) were added, and the mixture was stirred at 70°C for 3 hours. After stirring for 3 hours, the reaction mixture was allowed to cool to room temperature (25°C; the same applies hereinafter). The concentration was adjusted with ethyl acetate to obtain a 30% by mass solution of Polymer PU1 (solvent: a mixture of IPA, ethyl acetate, and methyl ethyl ketone).

Polymer PU1 had a weight average molecular weight (Mw) of 11,000 and an acid value of 0.7 mmol/g. Polymer PU1 had an acryloyl group as a photopolymerizable group.

Polymer PU2

Dimethylolpropionic acid (DMPA) (9.6 g), dicyclohexylmethane-4,4-diisocyanate (HMDI) (55.0 g), tricyclodecanedimethanol (14.7 g), bisphenol A epoxy diacrylate (25.9 g), and ethyl acetate (66.1 g) were placed into a three-necked flask, and the mixture was heated to 70°C. To the flask was added U-600 (0.1 g), and the mixture was stirred at 70°C for 7 hours.
Thereafter, a 30% by mass solution of Polymer PU2 was obtained in the same manner as the solution of Polymer PU1.
Polymer PU2 had a weight average molecular weight (Mw) of 11,000 and an acid value of 0.7 mmol/g. Polymer PU2 had an acryloyl group as a photopolymerizable group.

Polymer PU3

Dimethylolpropionic acid (DMPA) (8.0 g), dicyclohexylmethane-4,4-diisocyanate (HMDI) (45.0 g), tricyclodecanedimethanol (16.5 g), bisphenol A epoxy diacrylate (6.8 g), T5652 (11.4 g), and methyl ethyl ketone (48.8 g) were placed into a three-necked flask, and the mixture was heated to 70°C. To the flask was added U-600 (0.1 g), and the mixture was stirred at 70°C for 7 hours.
Thereafter, a 30% by mass solution of Polymer PU3 was obtained in the same manner as the solution of Polymer PU1.
Polymer PU3 had a weight average molecular weight (Mw) of 11,000 and an acid value of 0.7 mmol/g. Polymer PU3 had an acryloyl group as a photopolymerizable group.

Polymer PU4

Dimethylolpropionic acid (DMPA) (8.5 g), hexamethylene diisocyanate (HDI) (39.4 g), tricyclodecanedimethanol (22.1 g), bisphenol A epoxy diacrylate (23.0 g), and methyl ethyl ketone (60.0 g) were placed into a three-necked flask, and the mixture was heated to 70°C. To the flask was added U-600 (0.1 g), and the mixture was stirred at 70°C for 7 hours.
Thereafter, a 30% by mass solution of Polymer PU4 was obtained in the same manner as the solution of Polymer PU1.
Polymer PU4 had a weight average molecular weight (Mw) of 11,000 and an acid value of 0.7 mmol/g. Polymer PU4 had an acryloyl group as a photopolymerizable group.

Polymer PU5

Dimethylolpropionic acid (DMPA) (10.7 g), isophorone diisocyanate (IPDI) (37.3 g), polyethylene glycol 2000 (FUJIFILM Wako Pure Chemical Corporation) (40.4 g), bisphenol A epoxy diacrylate (29.0 g), and methyl ethyl ketone (76.3 g) were placed into a three-necked flask, and the mixture was heated to 70°C. To the flask was added U-600 (0.1 g), and the mixture was stirred at 70°C for 7 hours.
Thereafter, a 30% by mass solution of Polymer PU5 was obtained in the same manner as the solution of Polymer PU1.
Polymer PU5 had a weight average molecular weight (Mw) of 11,000 and an acid value of 0.7 mmol/g. Polymer PU5 had an acryloyl group as a photopolymerizable group.

Polymer AC1

Ethyl acetate (101.0 g) and isopropanol (43.3 g) were weighed into a 1,000 ml three-necked flask equipped with a condenser, and the mixture was heated and stirred at 65°C in a nitrogen stream. Separately, ethyl acetate (89.0 g), isopropanol (41.3 g), n-butyl acrylate (5.7 g), methyl methacrylate (107.1 g), methacrylic acid (7.2 g), and 2,2'-azobis(2,4-dimethylvaleronitrile) ("V-65", manufactured by FUJIFILM Wako Pure Chemical Corporation) (3.7 g) were mixed together, and the resulting mixed solution was added dropwise to the above flask over 3 hours. After completion of dropwise addition and heating at 65°C for 1 hour, V-65 (1.24 g) was added, and the mixture was further stirred at 70°C for 3 hours. The reaction mixture was allowed to cool to room temperature. The concentration was then adjusted with ethyl acetate to obtain a 30% by mass solution of Polymer AC1 (solvent: a mixture of IPA and ethyl acetate).
Polymer AC1 had a weight average molecular weight (Mw) of 11,000 and an acid value of 0.7 mmol/g.

Example 1

Preparation of Oil Phase Component

Ethyl acetate (56.0 g), the 30% by mass solution of Polymer PU1 (93.5 g), phenoxyethyl acrylate (manufactured by Tokyo Chemical Industry Co., Ltd.) (12.9 g), bis(2,4,6-trimethylbenzoyl)phenylphosphine oxide (the product name "Omnirad 819", manufactured by IGM Resins B.V) (2.4 g), and isopropylthioxanthone (0.4 g) were mixed together, and the mixture was stirred for 30 minutes to obtain an oil phase component.

Preparation of Aqueous Phase Component

Distilled water (162.4 g) and sodium hydroxide, serving as a neutralizer, were mixed together, and the mixture was stirred for 15 minutes to obtain an aqueous phase component. The amount of sodium hydroxide was adjusted such that the particles had an anion value of 0.33 mmol/g.
The oil phase component and the aqueous phase component were mixed together. The resulting mixture was emulsified at room temperature using a homogenizer at 7,000 rpm for 30 minutes to obtain an emulsion. Distilled water (57.6 g) was added to the resulting emulsion, and the resulting liquid was heated to 50°C and was stirred at 50°C for 4 hours to distill off ethyl acetate from the above liquid.
The liquid from which ethyl acetate was distilled off was diluted with distilled water to a solid content of 25% by mass to obtain Aqueous Dispersion 1.

Preparation of Ink

Aqueous Dispersion 1 thus obtained was placed and sealed in a container and was allowed to stand at room temperature for two weeks. Using Aqueous Dispersion 1 two weeks after preparation, an ink was prepared by mixing together the individual components in the following composition.
The resulting ink is also one form of the aqueous dispersion.

· Aqueous Dispersion 1 ... 50% by mass
· Pigment dispersion (the product name "Pro-jet Cyan APD1000", manufactured by FUJIFILM Imaging Colorants Inc., pigment concentration: 14% by mass) ... 15% by mass
· Fluorinated surfactant (the product name "Capstone FS-31", manufactured by DuPont, solid content: 25% by mass) ... 0.3% by mass
· Propylene glycol ... 15% by mass
· Water ... balance for 100% by mass of entire ink

Examples 2 to 22 and Comparative Examples 1 and 2

Aqueous dispersions were prepared in the same manner as in Example 1 except that the types and contents of the resin, the photoradical generator, the compound having the amino group A, and the polymerizable monomer were changed to the types and contents shown in Table 1, and inks were prepared in the same manner as in Example 1.
The compound having the amino group A was contained in the oil phase component.
Details of the photoradical generators, the compounds having the amino group A, and the polymerizable monomers are as follows.

Photoradical Generator (Intramolecular Cleavage Type Photopolymerization Initiator)

. 819 ... bis(2,4,6-trimethylbenzoyl)phenylphosphine oxide (the product name "Omnirad 819", molecular weight: 418.5
· TPO-L ... (2,4,6-trimethylbenzoyl)ethoxyphenylphosphine oxide (the product name "Omnirad TPO-L", manufactured by IGM Resins B.V), molecular weight: 316.3 Photoradical Generator (Intramolecular Hydrogen Abstraction Type Photopolymerization Initiator)
· ITX ... isopropylthioxanthone (the product name "Speedcure ITX", manufactured by Lambson Ltd.), molecular weight: 254.4
7010 ... 1,3-di({α-[1-chloro-9-oxo-9H-thioxanthen-4-yl)oxy]acetylpoly[oxy(1-methylethylene)]}oxy)-2,2-bis({α-[1-methylethylene)]}oxymethyl)propane (the product name "Speedcure 7010", manufactured by Lambson Ltd.), molecular weight: 1,200

Compound Having Amino Group A

- · CN371 ... amine-modified acrylate (the product name "CN371", manufactured by Sartomer Company, Inc.), molecular weight: 459.0
- · N-Gly ... N,N-dimethylglycine (manufactured by Tokyo Chemical Industry Co., Ltd.), molecular weight: 103.1
- · ASA ... poly(ethylene glycol) bis(p-dimethylaminobenzoate) (the product name "Omnipol ASA", manufactured by IGM Resins B.V, molecular weight: 510.0

Polymerizable Monomer

- · PEA ... phenoxyethyl acrylate (manufactured by Tokyo Chemical Industry Co., Ltd.), molecular weight: 192.2
- · TCDDMDA ... tricyclodecanedimethanol diacrylate (the product name "SR833NS", manufactured by Sartomer Company, Inc.), molecular weight: 304.4
- · GPTA ... glycerol propoxy triacrylate (the product name "OTA480", manufactured by Daicel-Allnex Ltd.), molecular weight: 480.0

HSP Distance

After 500 mg of a sample was completely dissolved in 10 mL of tetrahydrofuran (THF), deionized water was added dropwise to the resulting solution until the solution became cloudy. The volume fraction [deionized water/(deionized water + THF)] at which the solution became cloudy was determined as Vw.

After 500 mg of a sample was completely dissolved in 10 mL of tetrahydrofuran (THF), hexane was added dropwise to the resulting solution until the solution became cloudy. The volume fraction [hexane/(hexane + THF)] at which the solution became cloudy was determined as Vh.

The HSP distance between the resin and the photoradical generator and the HSP distance between the photoradical generator and the compound having the amino group A were calculated using the δD, δP, and δH of the resin, the photoradical generator, and the compound having the amino group A, which were calculated using the equations described above.

For calculation of Vh for Omnirad 819, which exhibits no cloud point in the above method, 500 mg of a sample was added to 20 mL of hexane, and THF was added dropwise thereto. The volume fraction was estimated based on the amount of THF that had been added immediately before the sample dissolved.

In addition, for Omnirad TPO-L and Speedcure ITX, which completely dissolve in hexane, Vh was assumed to be 1.

For dimethylglycine, which does not dissolve in THF or hexane but dissolves only in water, δD, δP, and δH were assumed to be identical to those of water.

Tables 1 and 2 show the δD, δP, and δH of the resins, the photoradical generators, and the compounds having the amino group A as calculated by the above method. When two photoradical generators were used, the mass ratio thereof was recited in parentheses.

Table 1

| | | δD | δP | δH |
|---|---|---|---|---|
| Resin | PU1 | 16.4 | 6.2 | 11.1 |
| | PU2 | 16.4 | 7.2 | 13.9 |
| | PU3 | 16.4 | 6.7 | 12.4 |
| | PU6 | 16.4 | 6.5 | 11.8 |
| | PU4 | 16.4 | 8.0 | 15.8 |
| | PU5 | 16.2 | 7.9 | 16.7 |
| | AC1 | 16.2 | 6.1 | 11.6 |

Table 2

| | | δD | δP | δH |
|---|---|---|---|---|
| Photoradical generator | 819 | 15.7 | 4.9 | 10.3 |
| | ITX | 15.4 | 3.6 | 8.0 |
| | TPO-L | 15.4 | 5.0 | 11.8 |
| | 7010 | 16.1 | 5.7 | 10.7 |
| Compound having amino group A | CN371 | 16.0 | 6.4 | 13.1 |
| | N-Gly | 15.5 | 16.0 | 42.3 |
| | ASA | 15.7 | 7.2 | 16.6 |

Film Forming Method

An ink cartridge accompanying an ink jet recording apparatus (the product name "DMP-2850", manufactured by FUJIFILM Corporation) was filled with an ink, and the ink was ejected onto a PVC film at 900 dpi and a droplet ejection volume of 10 pL.

After ejection, the ink was exposed ten times to light from a 395 nm LED lamp (the product name "PEL UV CURE UNIT", manufactured by Printed Electronics Ltd.) at about 250 mW/$cm^2$ to obtain an ink film.

The prepared ink and the resulting ink film were used to evaluate migration, rubfastness, ejectability, and preservation stability.

Migration

In the above film forming method, an ink film A was prepared by applying the ink onto a substrate, and an ink film B was prepared by applying the ink onto a substrate and then exposing the ink to light. Each ink film was immersed in a tetrahydrofuran/methanol (in a mass ratio of 1: 1) solution. The total amount (extraction amount) of ink component included in the solution after immersion was measured using HPLC.

The amount of component extracted from the ink film A was determined as extraction amount A, and the amount of component extracted from the ink film B was determined as extraction amount B. The extraction rate was calculated based on the following equation. Migration was evaluated based on the extraction rate. The evaluation criteria are as follows.

$$\text{Extraction rate (\% by mass)} = (\text{extraction amount B/extraction amount A}) \times 100$$

A: The extraction rate was 1% by mass or less.
B: The extraction rate was more than 1% by mass and 3% by mass or less.
C: The extraction rate was more than 3% by mass and 5% by mass or less.
D: The extraction rate was more than 5% by mass and 10% by mass or less.
E: The extraction rate was more than 10% by mass.

Rubfastness

In the above film forming method, a 3 cm × 10 cm ink film was formed on a substrate at a coverage rate of 100%. The substrate on which the ink film was formed was allowed to stand in an environment at 25°C and a relative humidity of 50% for 24 hours. After 24 hours, the surface of the ink film was rubbed 100 times with a cotton cloth (Canequim No. 3) using a Gakushin type friction tester under a load of 200 g. Thereafter, the surface of the ink film was visually observed, and the rubfastness was evaluated based on the surface condition of the ink film. The evaluation criteria are as follows.

A: The ink film had no scratch marks.
B: The ink film had slight scratch marks.
C: The ink film had scratch marks, and the substrate was visible in a proportion of less than 5% relative to the total area of the ink film.

D: The ink film had scratch marks, and the substrate was visible in a proportion of 5% or more and less than 50% relative to the total area of the ink film.

E: Almost no ink film remained, and the substrate was visible in a proportion of 50% or more relative to the total area of the ink film.

Ejectability

The ink was ejected once onto a substrate at a coverage rate of 100% using the above film forming method. Thereafter, the ink jet recording apparatus was stopped at 25°C and a relative humidity of 50% for 30 minutes, and the inkjet head was exposed to air.

After 30 minutes, a nozzle check pattern was selected, and the ink was ejected once. The recorded nozzle check pattern was visually observed, and the ejectability was evaluated based on the number of non-ejecting nozzles. The evaluation criteria are as follows.

Evaluation Criteria

A: There were no non-ej ecting nozzles.
B: There were one or two non-ejecting nozzles.
C: There were three or four non-ejecting nozzles.
D: There were five or more non-ejecting nozzles.
E: Ejection failed.

Preservation Stability

An ink stored at room temperature within one day after preparation was placed and sealed in a container and was allowed to stand at 60°C for two weeks. The ink two weeks after preparation (the ink four weeks after the preparation of the aqueous dispersion) was ejected once onto a substrate at a coverage rate of 100% using the above film forming method. Thereafter, the ink jet recording apparatus was stopped at 25°C and a relative humidity of 50% for 30 minutes, and the inkjet head was exposed to air.

After 30 minutes, a nozzle check pattern was selected, and the ink was ejected once. The recorded nozzle check pattern was visually observed, and the preservation stability was evaluated based on the number of non-ejecting nozzles. The evaluation criteria are as follows.

Evaluation Criteria

A: There were no non-ej ecting nozzles.
B: There were one or two non-ejecting nozzles.
C: There were three or four non-ejecting nozzles.
D: There were five or more non-ejecting nozzles.
E: Ejection failed.

Table 3 shows the evaluation results.

Table 3 lists the types, C=C values, and glass transition temperatures (Tg, unit: °C) of the resins and the contents (unit: % by mass) thereof relative to the total amount of the specific particles. The C=C value of a resin means the number of millimoles of ethylenic double bonds in 1 g of the resin (unit: mmol/g).

For photoradical generators, Table 3 lists the types of intramolecular cleavage type photopolymerization initiators and intramolecular hydrogen abstraction type photopolymerization initiators, the fractions (unit: % by mass) thereof in the photoradical generators, and the contents (unit: % by mass) of the photoradical generators relative to the total amount of the specific particles. In addition, Table 3 lists the number average molecular weights (Mn) of the intramolecular hydrogen abstraction type photopolymerization initiators. "Solid fraction" in the "Photoradical generator" column means the proportion of the number of moles of the photoradical generator present as a solid relative to the total number of moles of the photoradical generator (unit: mol%).

Table 3 lists the types of compounds having the amino group A and the contents (unit: % by mass) thereof relative to the total amount of the specific particles. "Solid fraction" in the "Compound having amino group A" column

means the proportion of the number of moles of the compound, having the amino group A, that was present as a solid relative to the total number of moles of that compound (unit: mol%).

Table 3 lists the types of compounds having the amino group A and the contents (unit: % by mass) thereof relative to the total amount of the specific particles.

Table 3 lists the types of polymerizable monomers and the contents (unit: % by mass) thereof relative to the total amount of the specific particles.

In Table 3, "ΔHSP (RP)" means the HSP distance between the resin and the photoradical generator. "ΔHSP (RN)" means the HSP distance between the photoradical generator and the compound having the amino group A.

In Table 3, "Amino group/photoradical generator" means the proportion of the number of moles of the amino group A relative to the total number of moles of the photoradical generator (unit: mol%).

In Table 3, "Photoradical generator in particles" means the number of millimoles of the photoradical generator in 1 g of the particles (unit: mmol/g).

In Table 3, "C=C value of particles" means the number of millimoles of ethylenic double bonds in 1 g of the particles (unit: mmol/g).

In Table 3, "Photoradical generator/C=C" means the proportion of the number of moles of the photoradical generator relative to the number of moles of ethylenic double bonds (unit:

mol%).

Table 3

| | Resin | | | | Photoradical generator | | | | | | | Compound having amino group A | | | Polymerizable monomer | | ΔHSP (RP) | ΔHSP (RN) | Amino group A/ photoradical generator | Photoradical generator in particles | C=C value of particles | Photoradical generator/ C=C | Evaluation | | | |
|---|---|---|---|---|---|---|---|---|---|---|---|---|---|---|---|---|---|---|---|---|---|---|---|---|---|---|
| | Type | C=C value | Tg | Content | Intramolecular cleavage type photopolymerization initiator | | Intramolecular hydrogen abstraction type photopolymerization initiator | | | Content | Solid fraction | Type | Content | Solid fraction | Type | Content | | | | | | | Migration | Rubfastness | Ejectability | Preservation stability |
| | | | | | Type | Fraction | Type | Mn | Fraction | | | | | | | | | | | | | | | | | |
| Ex. 1 | PU1 | 1.3 | 62 | 50 | 819 | 85 | ITX | 254.4 | 15 | 5.0 | 0 | - | - | - | PEA | 45.0 | 2.3 | - | - | 0.131 | 3.011 | 4.4 | C | B | A | A |
| Ex. 2 | PU1 | 1.3 | 62 | 50 | 819 | 85 | 7010 | 1200 | 15 | 6.0 | 0 | - | - | - | PEA | 44.0 | 1.8 | - | - | 0.129 | 2.959 | 4.4 | C | B | A | A |
| Ex. 3 | PU1 | 1.3 | 62 | 50 | TPO-L | 85 | 7010 | 1200 | 15 | 4.8 | 0 | - | - | - | PEA | 45.2 | 2.2 | - | - | 0.135 | 3.022 | 4.5 | C | B | A | A |
| Ex. 4 | PU1 | 1.3 | 62 | 50 | TPO-L | 85 | 7010 | 1200 | 15 | 6.0 | 0 | - | - | - | PEA | 44.0 | 2.2 | - | - | 0.169 | 2.959 | 5.7 | B | B | A | A |
| Ex. 5 | PU1 | 1.3 | 62 | 50 | TPO-L | 85 | ITX | 254.4 | 15 | 5.7 | 0 | - | - | - | PEA | 44.3 | 2.7 | - | - | 0.187 | 2.975 | 6.3 | C | B | A | A |
| Ex. 6 | PU1 | 1.3 | 62 | 50 | TPO-L | 85 | 7010 | 1200 | 15 | 24.0 | 0 | - | - | - | PEA | 26.0 | 2.2 | - | - | 0.675 | 2.023 | 33.4 | B | B | A | A |
| Ex. 7 | PU1 | 1.3 | 62 | 50 | TPO-L | 85 | 7010 | 1200 | 15 | 30.0 | 0 | - | - | - | PEA | 20.0 | 2.2 | - | - | 0.844 | 1.711 | 49.3 | B | C | A | A |
| Ex. 8 | PU1 | 1.3 | 62 | 50 | TPO-L | 85 | 7010 | 1200 | 15 | 8.0 | 0 | CN371 | 2 | 0 | PEA | 40.0 | 2.2 | 2.3 | 19.4 | 0.225 | 2.751 | 8.2 | A | A | A | A |
| Ex. 9 | PU1 | 1.3 | 62 | 50 | TPO-L | 85 | 7010 | 1200 | 15 | 8.0 | 0 | CN371 | 0.3 | 0 | PEA | 41.7 | 2.2 | 2.3 | 2.9 | 0.225 | 2.840 | 7.9 | B | A | A | A |
| Ex. 10 | PU1 | 1.3 | 62 | 50 | TPO-L | 85 | 7010 | 1200 | 15 | 8.0 | 0 | CN371 | 0.8 | 0 | PEA | 41.2 | 2.2 | 2.3 | 7.7 | 0.225 | 2.813 | 8.0 | A | A | A | A |
| Ex. 11 | PU1 | 1.3 | 62 | 50 | TPO-L | 85 | 7010 | 1200 | 15 | 8.0 | 0 | CN371 | 9.5 | 0 | PEA | 32.5 | 2.2 | 2.3 | 92.0 | 0.225 | 2.361 | 9.5 | A | A | A | A |
| Ex. 12 | PU1 | 1.3 | 62 | 50 | TPO-L | 85 | 7010 | 1200 | 15 | 8.0 | 0 | CN371 | 11 | 0 | PEA | 31.0 | 2.2 | 2.3 | 106.5 | 0.225 | 2.283 | 9.9 | B | A | B | B |
| Ex. 13 | PU4 | 1.3 | 45 | 50 | TPO-L | 85 | 7010 | 1200 | 15 | 8.0 | 0 | CN371 | 2 | 0 | PEA | 40.0 | 5.5 | 2.3 | 19.4 | 0.225 | 2.751 | 8.2 | A | A | B | B |
| Ex. 14 | PU5 | 1.0 | 1.7 | 50 | TPO-L | 85 | 7010 | 1200 | 15 | 8.0 | 0 | CN371 | 2 | 0 | PEA | 40.0 | 6.0 | 2.3 | 19.4 | 0.225 | 2.591 | 8.7 | A | A | C | C |
| Ex. 15 | PU2 | 1.0 | 90 | 50 | TPO-L | 85 | 7010 | 1200 | 15 | 8.0 | 0 | CN371 | 2 | 0 | PEA | 40.0 | 3.6 | 2.3 | 19.4 | 0.225 | 2.591 | 8.7 | B | A | A | A |
| Ex. 16 | PU3 | 0.3 | 107 | 50 | TPO-L | 85 | 7010 | 1200 | 15 | 8.0 | 0 | CN371 | 2 | 0 | PEA | 40.0 | 2.7 | 2.3 | 19.4 | 0.225 | 2.231 | 10.1 | C | A | A | A |
| Ex. 17 | PU1 | 1.3 | 62 | 50 | TPO-L | 85 | 7010 | 1200 | 15 | 8.0 | 0 | N-Gly | 0.5 | 100 | PEA | 41.5 | 2.2 | 32.6 | 21.6 | 0.225 | 2.829 | 8.0 | B | A | B | B |
| Ex. 18 | PU1 | 1.3 | 62 | 50 | TPO-L | 85 | 7010 | 1200 | 15 | 8.0 | 0 | ASA | 2 | 0 | PEA | 40.0 | 2.2 | 5.5 | 17.4 | 0.225 | 2.751 | 8.2 | A | A | A | A |
| Ex. 19 | PU1 | 1.3 | 62 | 50 | TPO-L | 85 | 7010 | 1200 | 15 | 8.0 | 0 | CN371 | 2 | 0 | TCDDMDA | 40.0 | 2.2 | 2.3 | 19.4 | 0.225 | 3.298 | 6.8 | A | A | A | A |
| Ex. 20 | PU1 | 1.3 | 62 | 50 | TPO-L | 85 | 7010 | 1200 | 15 | 8.0 | 0 | CN371 | 2 | 0 | GPTA | 40.0 | 2.2 | 2.3 | 19.4 | 0.225 | 3.170 | 7.1 | A | A | A | A |
| Ex. 21 | PU1 | 1.3 | 62 | 85 | TPO-L | 85 | 7010 | 1200 | 15 | 12.0 | 0 | CN371 | 3 | 0 | - | - | 2.2 | 2.3 | 19.4 | 0.337 | 1.139 | 29.6 | A | C | A | A |
| Ex. 22 | AC1 | 0.0 | 109 | 50 | TPO-L | 85 | 7010 | 1200 | 15 | 8.0 | 0 | CN371 | 2 | 0 | PEA | 40.0 | 1.9 | 2.3 | 19.4 | 0.225 | 2.081 | 10.8 | C | B | A | A |
| Comp. Ex. 1 | PU1 | 1.3 | 62 | 50 | 819 | 85 | ITX | 254.4 | 15 | 4.0 | 0 | - | - | - | TCDDMDA<br>GPTA | 23.0<br>23.0 | 2.3 | - | - | 0.105 | 3.619 | 2.9 | E | C | A | A |
| Comp. Ex. 2 | PU1 | 1.3 | 62 | 50 | 819 | 85 | ITX | 254.4 | 15 | 6.0 | 33 | - | - | - | TCDDMDA<br>GPTA | 22.0<br>22.0 | 2.3 | - | - | 0.157 | 3.490 | 4.5 | D | C | E | E |

As shown in Table 3, in Examples 1 to 22, in which the inks contained water and particles including a resin and a photoradical generator and having a polymerizable group, the polymerizable group included an ethylenic double bond, the proportion of the number of moles of the photoradical generator relative to the number of moles of the ethylenic double bonds in the particles was 4 mol% or more, and the proportion of the number of moles of the photoradical generator present as a solid relative to the total number of moles of the photoradical generator was 5 mol% or less, it was found that migration was reduced.

On the other hand, in Comparative Example 1, in which the content of the photoradical generator was such that the proportion of the number of moles of the photoradical generator relative to the number of moles of the ethylenic double bonds in the particles was less than 4 mol%, migration was observed.

In Comparative Example 2, in which the proportion of the number of moles of the photoradical generator present as a solid relative to the total number of moles of the photoradical generator in the particles was more than 5 mol%, migration was observed, and the ejectability and the preservation stability were poor.

In Example 4, in which the proportion of the number of moles of the photoradical generator relative to the number of moles of the ethylenic double bonds in the particles was 5 mol% or more, it was found that migration was reduced as compared to Example 3.

In Example 6, in which the proportion of the number of moles of the photoradical generator relative to the number of moles of the ethylenic double bonds in the particles was 40 mol% or less, it was found that the rubfastness was excellent as compared to Example 7.

In Example 13, in which the HSP distance between the resin and the photoradical generator was 5.5 $MPa^{1/2}$ or less, the ejectability and the preservation stability were excellent as compared to Example 14.

In Example 8, in which the particles further had an amino group A having a hydrogen atom on the carbon atom at the $\alpha$-position, it was found that migration was reduced and the rubfastness was excellent as compared to Example 4.

In Example 10, in which the proportion of the number of moles of the amino group A having a hydrogen atom on the carbon atom at the $\alpha$-position relative to the total number of moles of the photoradical generator was 5 mol% or more, it was found that migration was reduced as compared to Example 9.

In Example 11, in which the proportion of the number of moles of the amino group A having a hydrogen atom on the carbon atom at the $\alpha$-position relative to the total number of moles of the photoradical generator was 100 mol% or less, it was found that migration was reduced and the ejectability and the preservation stability were excellent as compared to Example 12.

In Example 9, in which the proportion of the number of moles of the compound, having the amino group A having a hydrogen atom on the carbon atom at the $\alpha$-position, that was present as a solid relative to the total number of moles of that compound in the particles was 5 mol% or less, it was found that the ejection and the preservation stability were excellent as compared to Example 17.

In Example 18, in which the HSP distance between the photoradical generator and the compound having the amino group A having a hydrogen atom on the carbon atom at the $\alpha$-position was 6 $MPa^{1/2}$ or less, it was found that migration was reduced as compared to Example 17.

In Example 15, in which the resin had a glass transition temperature of 90°C or lower, it was found that migration was reduced as compared to Example 16.

In Example 6, in which the photoradical generator included a hydrogen abstraction type initiator having a number average molecular weight of 1,000 or more, it was found that migration was reduced as compared to Example 5.

In Example 8, in which the particles included a polymerizable monomer, it was found that the rubfastness was excellent as compared to Example 21.

The disclosure of JP2021-161314, filed on Sep. 30, 2021, is incorporated herein by reference in its entirety. In addition, all documents, patent applications, and technical standards recited herein are incorporated herein by reference to the same extent as when the individual documents, patent applications, and technical standards are specifically and individually described as being incorporated by reference.

## Claims

**1.** An aqueous dispersion comprising:

water; and
particles including a resin and a photoradical generator and having a polymerizable group,
wherein the polymerizable group includes an ethylenic double bond,
a proportion of a number of moles of the photoradical generator relative to a number of moles of the ethylenic double bonds in the particles is 4 mol% or more, and
a proportion of a number of moles of the photoradical generator present as a solid relative to a total number of

moles of the photoradical generator is 5 mol% or less.

2. The aqueous dispersion according to claim 1, wherein the proportion of the number of moles of the photoradical generator relative to the number of moles of the ethylenic double bonds is 5 mol% to 40 mol%.

3. The aqueous dispersion according to claim 1 or 2, wherein an HSP distance between the resin and the photoradical generator is 5.5 $MPa^{1/2}$ or less.

4. The aqueous dispersion according to any one of claims 1 to 3, wherein the particles further have an amino group A having a hydrogen atom on a carbon atom at an $\alpha$-position.

5. The aqueous dispersion according to claim 4, wherein a proportion of a number of moles of the amino group A having a hydrogen atom on the carbon atom at the $\alpha$-position relative to the total number of moles of the photoradical generator is 5 mol% to 100 mol%.

6. The aqueous dispersion according to claim 4 or 5, wherein the particles further include a compound having the amino group A having a hydrogen atom on the carbon atom at the $\alpha$-position.

7. The aqueous dispersion according to claim 6, wherein a proportion of a number of moles of the compound, having the amino group, that is present as a solid relative to a total number of moles of the compound having the amino group A in the particles is 5 mol% or less.

8. The aqueous dispersion according to claim 6 or 7, wherein an HSP distance between the photoradical generator and the compound having the amino group A having a hydrogen atom on the carbon atom at the $\alpha$-position is 6 $MPa^{1/2}$ or less.

9. The aqueous dispersion according to any one of claims 1 to 8, wherein the resin has a glass transition temperature of 90°C or lower.

10. The aqueous dispersion according to any one of claims 1 to 9, wherein the photoradical generator includes a hydrogen abstraction type initiator having a number average molecular weight of 1,000 or more.

11. The aqueous dispersion according to any one of claims 1 to 10, wherein

the particles include a polymerizable monomer, and
the polymerizable group includes a polymerizable group of the polymerizable monomer.

12. The aqueous dispersion according to any one of claims 1 to 11, wherein the aqueous dispersion is an inkjet ink.

13. A film forming method comprising:

a step of applying the aqueous dispersion according to any one of claims 1 to 12 onto a substrate; and
a step of curing the aqueous dispersion applied onto the substrate.

**INTERNATIONAL SEARCH REPORT**

International application No. **PCT/JP2022/024151**

**A. CLASSIFICATION OF SUBJECT MATTER**

***C08F 290/06***(2006.01)i; ***B41J 2/01***(2006.01)i; ***B41M 5/00***(2006.01)i; ***C08F 265/02***(2006.01)i; ***C09D 11/30***(2014.01)i
FI: C08F290/06; C09D11/30; B41J2/01 501; B41M5/00 120; B41M5/00 100; C08F265/02

According to International Patent Classification (IPC) or to both national classification and IPC

**B. FIELDS SEARCHED**

Minimum documentation searched (classification system followed by classification symbols)

C08F290/06; B41J2/01; B41M5/00; C08F265/02; C09D11/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2008-546875 A (REICHHOLD INC) 25 December 2008 (2008-12-25)<br>claims 1-18, paragraphs [0002], [0028]-[0029], [0033]-[0039], examples 7-8 | 1-9, 11, 13<br>10, 12 |
| A | JP 2003-226730 A (TOYO INK MFG CO LTD) 12 August 2003 (2003-08-12)<br>claims 1-12, paragraphs [0108]-[0146], examples 13-14 | 1-13 |
| A | WO 2019/188522 A1 (FUJIFILM CORP) 03 October 2019 (2019-10-03)<br>claims 1-13, paragraphs [0258]-[0352], examples 301-305, 307 | 1-13 |
| A | WO 2016/122563 A1 (HEWLETT-PACKARD DEVELOPMENT COMPANY, L.P.) 04 August 2016 (2016-08-04)<br>claims 1-15, paragraphs [0008]-[0013], [0080]-[0107], example 2 | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/024151**

| Patent document cited in search report | Publication date (day/month/year) | Patent family member(s) | Publication date (day/month/year) |
|---|---|---|---|
| JP 2008-546875 A | 25 December 2008 | US 2007/0149704 A1<br>claims 1-18, paragraphs [0002], [0028]-[0029], [0033]-[0039], examples 7-8<br>US 2009/0162564 A1<br>WO 2006/138557 A2<br>CA 2607274 A1<br>KR 10-2008-0028353 A<br>CN 101198631 A | |
| JP 2003-226730 A | 12 August 2003 | (Family: none) | |
| WO 2019/188522 A1 | 03 October 2019 | US 2020/0392359 A1<br>claims 1-13, paragraphs [0592]-[0800], examples 301-305, 307<br>EP 3778804 A1<br>CN 111989374 A | |
| WO 2016/122563 A1 | 04 August 2016 | KR 10-2016-0013166 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6584677 B
- JP 2013202928 A
- WO 2021059933 A
- JP 6510681 B
- WO 2016052053 A
- JP 7159983 A
- JP H07159983 A
- JP 7031399 B
- JP H07031399 B
- JP 8224982 A
- JP H08224982 A
- JP 10000863 A
- JP H10000863 A
- JP 9134011 A
- JP H09134011 A
- JP 2004514014 A
- JP 2014040529 A
- JP 2009058750 A
- JP 60132767 A
- US 6084250 B
- JP 2021161314 A


### Non-patent literature cited in the description


- **K. W. SUH ; J. M. CORBETT.** *Journal of Applied Polymer Science,* 1968, vol. 12, 2359
- **SHINZO YAMASHITA.** Crosslinking Agent Handbook. Taiseisha, 1981
- **KIYOMI KATO.** UV/EB Curing Handbook (Raw Materials). Kobunshi Kankokai, 1985
- Applications and Markets of UV/EB Curing Technology. CMC, 1989, 79
- **EIICHIRO TAKIYAMA.** Polyester Resin Handbook. Nikkan Kogyo Shimbun, Ltd, 1988